# EUROPÄISCHE PATENTANMELDUNG

(11) **EP 3 034 909 A1**
(43) Veröffentlichungstag der Anmeldung: **22.06.2016**
(21) Anmeldenummer: 15194841.1
(22) Anmeldetag: 17.11.2015
(51) Int. Cl.: F16H 3/66

(54) **MEHRSTUFEN-AUTOMATGETRIEBE**

(30) Priorität: 17.12.2014 DE 102014226232
(71) Anmelder: ZF Friedrichshafen AG, 88046 Friedrichshafen (DE)
(72) Erfinder: Beck, Stefan, 88097 Eriskirch (DE); Sibla, Christian, 88097 Eriskirch (DE); Haupt, Josef, 88069 Tettnang (DE); Brehmer, Martin, 88069 Tettnang (DE)

(57) **Zusammenfassung**

Die Erfindung betrifft ein Automatgetriebe mit neun drehbaren Wellen (1 bis 9), vier Planetenradsätzen (RS1 bis RS4) und mehreren Schaltelementen (A bis F) zum Schalten von zumindest zehn Vorwärtsgängen und einem Rückwärtsgang. Ein zweites Element (ST4) des vierten Planetenradsatzes (RS4) bildet die als Antriebswelle (AN) ausgeführte erste Welle (1), ein zweites Element (ST3) des dritten Planetenradsatzes (RS3) die als Abtriebswelle (AB) ausgeführte zweite Welle (2), ein erstes Element (SO4) des vierten Planetenradsatzes (RS4) die dritte Welle (3). Die fünfte Welle (5) ist mit zumindest zwei (E, F) der Schaltelemente (A bis F; A bis G) ständig verbunden. Ein drittes Element (HO3) des dritten Planetenradsatzes (RS3) bildet die sechste Welle (6). Die siebte Welle (7) verbindet ein erstes Element (SO2) des zweiten Planetenradsatzes (RS2) ständig mit einem dritten Element (HO4) des vierten Planetenradsatzes (RS4). Ein zweites Element (ST2) des zweiten Planetenradsatzes (RS2) bildet die achte Welle (8), ein drittes Element (HO2) des zweiten Planetenradsatzes (RS2) die neunte Welle (9). Die dritten Welle (3) ist über ein erstes Schaltelement (A) festsetzbar. Ein zweites Schaltelement (B) ist mit der vierten Welle (4) verbunden. Ein drittes Schaltelement (C) ist im Kraftfluss zwischen der ersten und neunten Welle (1, 9) angeordnet, ein viertes Schaltelement (D) im Kraftfluss zwischen der zweiten und achten Welle (2, 8), ein fünftes Schaltelement (E) im Kraftfluss zwischen der fünften und achten Welle (5, 8), ein sechstes Schaltelement (F) im Kraftfluss zwischen der fünften und neunten Welle (5, 9).

## Beschreibung

Die vorliegende Erfindung betrifft ein Mehrstufen-Automatgetriebe in Planetenbauweise nach dem Oberbegriff des Patentanspruchs 1.

Automatisch schaltbare Fahrzeuggetriebe in Planetenbauweise im Allgemeinen sind im Stand der Technik bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung, günstigen Stufensprüngen und eine für den Anwendungsfall hinreichend große Anfahrübersetzung aufweisen. Außerdem sollen diese Getriebe einen möglichst geringen Bauaufwand, insbesondere eine geringe Anzahl an Schaltelementen erfordern und bei sequentieller Schaltweise so genannte Gruppenschaltungen vermeiden, so dass bei Schaltungen in den nächstfolgend höheren oder nächstfolgend niedrigeren Gang jeweils nur ein zuvor geschlossenes Schaltelement geöffnet und ein zuvor geöffnetes Schaltelement geschlossen wird.

Ein derartiges Mehrgang-Automatgetriebe geht beispielsweise aus der DE 10 2005 002 337 A1 der Anmelderin hervor. Es umfasst im Wesentlichen inklusive einer Antriebswelle und einer Abtriebswelle insgesamt acht drehbare Wellen, insgesamt vier Einzel-Planetenradsätze und fünf Schaltelemente. Durch selektives Sperren von jeweils drei der fünf als Kupplungen und Bremsen ausgeführten Schaltelemente sind insgesamt acht Vorwärtsgänge gruppenschaltungsfrei schaltbar.

Aus der DE 10 2009 047 271 A1 der Anmelderin sind alternative Getriebeschemata zu dem aus der DE 10 2005 002 337 A1 bekannten 8-Gang-Automatgetriebe bekannt, jeweils umfassend vier einzelne Planetenradsätze, fünf Schaltelemente und insgesamt neun Wellen. In einer ersten Variante wird ein Getriebe vorgeschlagen, bei dem im Unterschied zur DE 10 2005 002 337 A1 das Hohlrad des antriebsnah angeordneten ersten Planetenradsatzes, dessen Sonnenrad ständig mit dem Sonnenrad des mit der Antriebswelle verbundenen zweiten Planetenradsatzes verbunden über das erste Schaltelement am Getriebegehäuse festsetzbar ist, fest mit dem Getriebegehäuse verbunden ist. Hierbei ist das zweite Schaltelement im Kraftfluss zwischen dem Planetenradträger dieses ersten Planetenradsatzes und dem Hohlrad des mit der Abtriebswelle verbundenen vierten Planetenradsatzes angeordnet. In einer zweiten Variante wird ein Getriebe vorgeschlagen, bei dem im Unterschied zur DE 10 2005 002 337 A1 das Hohlrad des antriebsnah angeordneten ersten Planetenradsatzes fest mit dem Getriebegehäuse verbunden ist, wobei das zweite Schaltelement im Kraftfluss zwischen dem Sonnenrad dieses ersten Planetenradsatzes und dem über das erste Schaltelement am Getriebegehäuse festsetzbare Sonnenrad des mit der Antriebswelle verbundenen zweiten Planetenradsatzes angeordnet ist.

Aus der DE 10 2009 001 253 B3 der Anmelderin ist eine Weiterentwicklung des aus der DE 10 2005 002 337 A1 bekannten 8-Gang-Automatgetriebes bekannt. Hier konnte durch Hinzufügen eines als Kupplung ausgebildeten sechsten Schaltelementes im Kraftfluss zwischen Antriebswelle und dem durch Schließen des fünften der zuvor vorhandenen fünf Schaltelemente verblockbaren zweiten Planetenradsatz ein zusätzlicher Vorwärtsgang dargestellt werden, der von seiner Übersetzung her größer ist als der bisherige erste Gang des 8-Gang-Getriebes, also ein zusätzlicher Anfahrgang unterhalb des bisherigen ersten Gangs des 8-Gang-Getriebes.

Der vorliegenden Erfindung liegt die Aufgabe zugrunde, ein alternatives Mehrstufengetriebe der eingangs genannten Art mit insgesamt vier Planetenradsätzen anzugeben, das mittels eines vergleichsweise gering modifizierten Getriebeschemas zumindest zehn gruppenschaltungsfrei schaltbare Vorwärtsgänge aufweist.

Diese Aufgabe wird erfindungsgemäß durch ein Automatgetriebe mit den Merkmalen des Patentanspruchs 1 gelöst. Weitere vorteilhafte Ausgestaltungen und Weiterbildungen gehen aus den Unteransprüchen hervor.

Demnach wird ein Automatgetriebe vorgeschlagen, welches ein Gehäuse, insgesamt zumindest neun drehbare Wellen inklusive einer Antriebswelle und inklusive einer Abtriebswelle, vier einzelne Planetenradsätze und mehreren Schaltelemente aufweist, deren selektives Eingreifen verschiedene Übersetzungsverhältnisse zwischen Antriebswelle und Abtriebswelle bewirken zum Schalten von mehreren Vorwärtsgängen und (zumindest) einem Rückwärtsgang. Jeder der vier Planetenradsätze weist drei verschiedene Elemente auf, also jeweils ein Sonnenrad, einen Planetenradträger und ein Hohlrad.

Das zweite Element des vierten Planetenradsatzes bildet die als Antriebswelle ausgeführte erste Welle. Das zweite Element des dritten Planetenradsatzes bildet die als Abtriebswelle ausgeführte zweite Welle. Das erste Element des vierten Planetenradsatzes bildet die dritte Welle. Die fünfte Welle ist mit zumindest zwei der Schaltelemente ständig verbunden. Das dritte Element des dritten Planetenradsatzes bildet die sechste Welle. Das erste Element des zweiten Planetenradsatzes und das dritte Element des vierten Planetenradsatzes sind ständig miteinander verbunden und bilden (in Art einer Koppelwelle) die siebte Welle. Das zweite Element des zweiten Planetenradsatzes bildet die achte Welle. Das dritte Element des zweiten Planetenradsatzes bildet die neunte Welle.

Ein erstes Schaltelement ist im Kraftfluss zwischen der dritten Welle und dem Gehäuse angeordnet, sodass die dritte Welle festsetzbar ist. Ein zweites Schaltelement ist ständig mit der vierten Welle verbunden. Ein drittes Schaltelement ist im Kraftfluss zwischen der ersten Welle (Antriebswelle) und der neunten Welle angeordnet. Ein viertes Schaltelement ist im Kraftfluss zwischen der zweiten Welle (Abtriebswelle) und der achten Welle angeordnet. Ein fünftes Schaltelement ist im Kraftfluss zwischen der fünften Welle und der achten Welle angeordnet. Ein sechstes Schaltelement ist im Kraftfluss zwischen der fünften Welle und der neunten Welle angeordnet.

Wenn das dritte und sechste Schaltelement gleichzeitig geschlossen sind, rotiert die fünfte Welle also mit Drehzahl der Antriebswelle. Außerdem ist sowohl der zweite als auch der dritte Planetenradsatz durch Schließen von Schaltelementen verblockbar. Im verblockten Zustand eines Planetenradsatzes rotieren alle drei Elemente dieses Planetenradsatzes mit gleicher Drehzahl. Der zweite Planetenradsatz ist dann verblockt, wenn das fünfte und sechste Schaltelement gleichzeitig geschlossen sind.

Dabei ist unter der Formulierung "ständig verbunden" im Zusammenhang mit der Ankoppelung eines Schaltelementes an einen Planetenradsatz zu verstehen, dass das Eingangs- oder Ausgangselement des jeweiligen Schaltelementes über eine drehfeste oder drehelastischen Verbindung unmittelbar mit einem der Elemente des jeweiligen Planetenradsatzes verbunden ist, sodass es stets eine feste Drehzahlbeziehung zwischen diesem Planetenradsatzelement und dem Eingangs- bzw. Ausgangselement dieses Schaltelementes gibt.

Im Zusammenhang mit der Ankoppelung eines Schaltelementes an eine Welle ist unter der Formulierung "ständig verbunden" zu verstehen, dass das Eingangs- oder Ausgangselement des jeweiligen Schaltelementes über eine drehfeste oder drehelastischen Verbindung unmittelbar mit der jeweiligen Welle verbunden ist, sodass es stets eine feste Drehzahlbeziehung zwischen dieser Welle und dem Eingangs- bzw. Ausgangselement dieses Schaltelementes gibt.

Im Zusammenhang mit der Ankoppelung eines Planetenradsatzes an einen anderen Planetenradsatz ist unter der Formulierung "ständig verbunden" zu verstehen, dass eines der Elemente des jeweiligen Planetenradsatzes über eine drehfeste oder drehelastischen Verbindung unmittelbar mit einem der Elemente des jeweiligen anderen Planetenradsatzes verbunden ist, sodass es stets eine feste Drehzahlbeziehung zwischen diesen beiden Planetenradsatzelementen gibt.

Im Zusammenhang mit der Ankoppelung eines Planetenradsatzelementes oder eines Schaltelementes an das Gehäuse ist unter der Formulierung "ständig verbunden" zu verstehen, dass das jeweilige Planetenradsatzelement bzw. das Ausgangselement des jeweiligen Schaltelementes eine drehfeste oder drehelastischen Verbindung unmittelbar mit dem Gehäuse verbunden ist, sodass das jeweilige Planetenradsatzelement bzw. das Ausgangselement des jeweiligen Schaltelementes stets stillsteht.

Damit weist das erfindungsgemäße Automatgetriebe gegenüber dem Stand der Technik eine vollkommen eigenständige Kinematik auf. Unter Verwendung von sechs Schaltelementen sind zehn Vorwärtsgänge gruppenschaltungsfrei schaltbar. Ebenso ist ein Rückwärtsgang schaltbar.

Ist ausgehend von diesem Automatgetriebe mit sechs Schaltelementen ein zusätzliches siebtes Schaltelement vorgesehen, so ist dieses siebte Schaltelement im Kraftfluss zwischen der ersten und der achten Welle angeordnet. In diesem Fall können mit insgesamt sieben Schaltelementen elf Vorwärtsgänge gruppenschaltungsfrei schaltbar. Ebenso ist ein Rückwärtsgang schaltbar.

In einer bevorzugten ersten Ausgestaltung der Erfindung wird vorgeschlagen, dass das erste Element des ersten Planetenradsatzes ständig mit der dritten Welle verbunden ist, dass das dritte Element des ersten Planetenradsatzes die vierte Welle des Automatgetriebes bildet und über das zweite Schaltelement an dem Gehäuse festsetzbar ist, dass das erste Element des dritten Planetenradsatzes ständig mit der fünften Welle verbunden ist, und dass das zweite Element des ersten Planetenradsatzes ständig mit der sechsten Welle verbunden ist.

Das zweite Schaltelement ist hier also im Kraftschluss zwischen der vierten Welle und dem Gehäuse angeordnet, sodass das dritte Element des ersten Planetenradsatzes über das zweite Schaltelement an dem Gehäuse festsetzbar ist. Wenn das vierte und fünfte Schaltelement gleichzeitig geschlossen sind, rotieren alle drei Elemente des dritten Planetenradsatzes mit gleicher Drehzahl. Zudem weist dieses Automatgetriebe drei Koppelwellen auf, über die die vier Planetenradsätze ständig miteinander verbunden sind, nämlich die dritte Welle zur ständigen Kopplung des ersten Elementes des ersten Planetenradsatzes mit dem ersten Element des vierten Planetenradsatzes, die sechste Welle zur ständigen Kopplung des zweiten Elementes des ersten Planetenradsatzes mit dem dritten Element des dritten Planetenradsatzes, sowie die siebte Welle zur ständigen Kopplung des ersten Elementes des zweiten Planetenradsatzes mit dem dritten Element des vierten Planetenradsatzes.

In einer bevorzugten zweiten Ausgestaltung der Erfindung wird vorgeschlagen, dass das dritte Element des ersten Planetenradsatzes ständig mit dem Gehäuse verbunden ist, dass das erste Element des ersten Planetenradsatzes die vierte Welle des Automatgetriebes bildet und über das zweite Schaltelement mit der dritten Welle verbindbar ist, dass das erste Element des dritten Planetenradsatzes ständig mit der fünften Welle verbunden ist, und dass das zweite Element des ersten Planetenradsatzes ständig mit der sechsten Welle verbunden ist.

Das zweite Schaltelement ist hier also im Kraftschluss zwischen der dritten Welle und der vierten Welle angeordnet, sodass das erste Element des ersten Planetenradsatzes über das zweite Schaltelement mit dem ersten Element des vierten Planetenradsatzes verbindbar ist. Da die vierte Welle über das erste Schaltelement am Gehäuse festsetzbar ist, ist die dritte Welle bzw. das erste Element des ersten Planetenradsatzes durch gleichzeitiges Schließen des ersten und zweiten Schaltelementes am Gehäuse festsetzbar. Wenn das vierte und fünfte Schaltelement gleichzeitig geschlossen sind, rotieren alle drei Elemente des dritten Planetenradsatzes mit gleicher Drehzahl. Zudem weist dieses Automatgetriebe zwei Koppelwellen auf, über die die vier Planetenradsätze ständig miteinander verbunden sind, nämlich die sechste Welle zur ständigen Kopplung des zweiten Elementes des ersten Planetenradsatzes mit dem dritten Element des dritten Planetenradsatzes, sowie die siebte Welle zur ständigen Kopplung des ersten Elementes des zweiten Planetenradsatzes mit dem dritten Element des vierten Planetenradsatzes.

In einer bevorzugten dritten Ausgestaltung der Erfindung wird vorgeschlagen, dass das dritte Element des ersten Planetenradsatzes ständig mit dem Gehäuse verbunden ist, dass das erste Element des ersten Planetenradsatzes ständig mit der dritten Welle verbunden ist, dass das zweite Element des ersten Planetenradsatzes die vierte Welle des Automatgetriebes bildet und über das zweite Schaltelement mit der sechsten Welle verbindbar ist, und dass das erste Element des dritten Planetenradsatzes ständig mit der fünften Welle verbunden ist.

Das zweite Schaltelement ist hier also im Kraftschluss zwischen der vierten Welle und der sechsten Welle angeordnet, sodass das zweite Element des ersten Planetenradsatzes über das zweite Schaltelement mit dem dritten Element des dritten Planetenradsatzes verbindbar ist. Wenn das vierte und fünfte Schaltelement gleichzeitig geschlossen sind, rotieren alle drei Elemente des dritten Planetenradsatzes mit gleicher Drehzahl. Zudem weist dieses Automatgetriebe zwei Koppelwellen auf, über die die vier Planetenradsätze ständig miteinander verbunden sind, nämlich die dritte Welle zur ständigen Kopplung des ersten Elementes des ersten Planetenradsatzes mit dem ersten Element des vierten Planetenradsatzes, sowie die siebte Welle zur ständigen Kopplung des ersten Elementes des zweiten Planetenradsatzes mit dem dritten Element des vierten Planetenradsatzes.

In einer bevorzugten vierten Ausgestaltung der Erfindung wird vorgeschlagen, dass das dritte Element des ersten Planetenradsatzes ständig mit dem Gehäuse verbunden ist, dass das erste Element des ersten Planetenradsatzes ständig mit der dritten Welle verbunden ist, dass das erste Element des dritten Planetenradsatzes die vierte Welle des Automatgetriebes bildet und über das zweite Schaltelement mit der fünften Welle verbindbar ist, und dass das zweite Element des ersten Planetenradsatzes ständig mit der sechsten Welle verbunden ist. Die fünfte Welle ist mit keinem der Planetenradsatzelemente direkt verbunden.

Das zweite Schaltelement ist hier also im Kraftschluss zwischen der vierten Welle und der fünften Welle angeordnet, sodass das erste Element des dritten Planetenradsatzes mit der fünften Welle verbindbar ist, die ihrerseits mit keinem der Planetenradsatzelemente direkt verbunden ist. Wenn das zweite, vierte und fünfte Schaltelement gleichzeitig geschlossen sind, rotieren alle drei Elemente des dritten Planetenradsatzes mit gleicher Drehzahl. Zudem weist dieses Automatgetriebe drei Koppelwellen auf, über die die vier Planetenradsätze ständig miteinander verbunden sind, nämlich die dritte Welle zur ständigen Kopplung des ersten Elementes des ersten Planetenradsatzes mit dem ersten Element des vierten Planetenradsatzes, die sowie die sechste Welle zur ständigen Kopplung des zweiten Elementes des ersten Planetenradsatzes mit dem dritten Element des dritten Planetenradsatzes, sowie die siebte Welle zur ständigen Kopplung des ersten Elementes des zweiten Planetenradsatzes mit dem dritten Element des vierten Planetenradsatzes.

Vorzugsweise sind bei dem erfindungsgemäßen Automatgetriebe in jedem Gang vier der Schaltelemente geschlossen. Sind sechs Schaltelemente vorgesehen, so sind in jedem Gang vorzugsweise also nur zwei der Schaltelemente nicht geschlossen. Sind sieben Schaltelemente vorgesehen, so sind in jedem Gang vorzugsweise also nur drei der Schaltelemente nicht geschlossen. Bei einem Wechsel von einem Gang in den nachfolgend höheren oder niedrigeren Gang wird jeweils nur eines der zuvor geschlossenen Schaltelemente geöffnet und ein zuvor offenes Schaltelement geschlossen, sodass beim sequenziellen Hoch- und Zurückschalten um jeweils einen Gang so genannte Gruppenschaltungen vermieden werden.

Um mit sechs Schaltelementen zehn Vorwärtsgänge und einen Rückwärtsgang darzustellen, kann ein derartiges Getriebes folgende Schaltlogik bzw. Ganglogik aufweisen: Im ersten Vorwärtsgang sind das erste, zweite, dritte und sechste Schaltelement geschlossen bzw. drehmomentübertragend. Im zweiten Vorwärtsgang sind das erste, zweite, dritte und fünfte Schaltelement geschlossen bzw. drehmomentübertragend. Im dritten Vorwärtsgang sind das erste, zweite, fünfte und sechste Schaltelement geschlossen bzw. drehmomentübertragend. Im vierten Vorwärtsgang sind das zweite, dritte, fünfte und sechste Schaltelement geschlossen bzw. drehmomentübertragend. Im fünften Vorwärtsgang sind das zweite, vierte, fünfte und sechste Schaltelement geschlossen bzw. drehmomentübertragend. Im sechsten Vorwärtsgang sind das zweite, dritte, vierte und fünfte Schaltelement geschlossen bzw. drehmomentübertragend. Im siebten Vorwärtsgang sind das zweite, dritte, vierte und sechste Schaltelement geschlossen bzw. drehmomentübertragend. Im achten Vorwärts-gang sind das dritte, vierte, fünfte und sechste Schaltelement geschlossen bzw. drehmomentübertragend. Im neunten Vorwärtsgang sind das erste, dritte, vierte und sechste Schaltelement geschlossen bzw. drehmomentübertragend. Im zehnten Vorwärtsgang sind das erste, vierte, fünfte und sechste Schaltelement geschlossen bzw. drehmomentübertragend. Im Rückwärtsgang sind das erste, zweite, vierte und sechste Schaltelement geschlossen bzw. drehmomentübertragend.

Ist im Kraftfluss zwischen der ersten und achten Welle ein zusätzliches siebtes Schaltelement vorhanden, so ist gegenüber der Getriebeausführung mit nur sechs Schaltelementen ein zusätzlicher Vorwärtsgang unterhalb des ersten Gangs der Getriebeausführung mit nur sechs Schaltelementen realisierbar, also ein zusätzlicher Vorwärtsgang mit einer Übersetzung größer derjenigen Übersetzung des ersten Gangs der Getriebeausführung mit nur sechs Schaltelementen. Damit eignet sich dieser zusätzliche Vorwärtsgang gut als ein so genannter Crawler mit kleiner Gesamtübersetzung für eine große Zugkraft. Als Schaltlogik bzw. Ganglogik kann vorgesehen sein, dass in einem solchen zusätzlichen Vorwärtsgang das erste, zweite, sechste und siebte Schaltelement geschlossen bzw. drehmomentübertragend sind, während in allen anderen Vorwärtsgängen und im Rückwärtsgang das siebte Schaltelement nicht geschlossen bzw. drehmomentübertragend ist.

In vorteilhafter Weise ist es möglich, das zusätzliche siebte Schaltelement in dem gleichen Bauraum oder in einem nur wenig größeren Bauraum unterzubringen, der für das erfindungsgemäße Getriebe mit nur sechs Schaltelementen benötigt wird.

Die erfindungsgemäße Kinematik des Automatgetriebes mit der direkten Verbindung des vierten, fünften und sechsten Schaltelementes ermöglicht in vorteilhafter Weise, das dritte und sechste Schaltelement räumlich gesehen unmittelbar benachbart zueinander anzuordnen, das fünfte und sechste Schaltelement räumlich gesehen unmittelbar benachbart zueinander anzuordnen und vierte und fünfte Schaltelement räumlich gesehen unmittelbar benachbart zueinander anzuordnen. Dies erlaubt in fertigungstechnisch vorteilhafter Weise den Einsatz eines gemeinsamen Lamellenträgers für diese Schaltelemente.

Alle vier Planetenradsätze sind vorzugsweise als so genannte Minus-Planetenradsätze ausgeführt, deren jeweilige Planetenräder mit Sonnenrad und Hohlrad des jeweiligen Planetenradsatzes kämmen.

Alternativ zu der Ausführung des Radsatzsystems mit vier einzelnen Minus-Planetenradsätzen können einzelne der Minus-Planetenradsätze durch einen so genannten Plus-Planetenradsatz ersetzt sein, was alternative räumliche Anordnung einzelner Schaltelemente innerhalb des Getriebegehäuses ermöglicht. Bekanntlich weist ein Plus-Planetenradsatz einen Planetenradträger ("Steg") mit daran drehbar gelagerten inneren und äußeren Planetenrädern auf, wobei jedes der inneren Planetenräder mit jeweils einem äußeren Planetenrad und mit dem Sonnenrad des Plus-Planetenradsatzes kämmt, während jedes der äußeren Planetenräder mit jeweils einem inneren Planetenrad und mit dem Hohlrad des Plus-Planetenradsatzes kämmt. Alternativ zu der Ausführung des Radsatzsystems mit vier einzelnen Minus-Planetenradsätzen können auch mehrere der Minus-Planetenradsätze durch Plus-Planetenradsätze ersetzt sein.

Zur Gewährleistung der gleichen Kinematik des beanspruchten Radsatzsystems ist vorgesehen, dass das erste Element jedes Minus-Planetenradsatzes und das erste Element jedes Plus-Planetenradsatzes als Sonnenrad ausgebildet ist, dass das zweite Element jedes Minus-Planetenradsatzes als Planetenradträger ausgebildet ist, während das zweite Element jedes PlusPlanetenradsatzes als Hohlrad ausgebildet ist, und dass das dritte Element jedes Minus-Planetenradsatzes als Hohlrad ausgebildet ist, während das dritte Element jedes Plus-Planetenradsatzes als Planetenradträger ausgebildet ist.

Hinsichtlich der räumlichen Anordnung der vier Planetenradsätze im Gehäuse des Automatgetriebes wird in einer Ausgestaltung vorgeschlagen, alle vier Planetenradsätze koaxial zueinander nebeneinander in der definierten Reihenfolge "erster, vierter, zweiter, dritter Planetenradsatz" anzuordnen, wodurch es möglich ist, alle Kupplungen in einfacher Weise leckagearm mit dem zur hydraulischen Betätigung erforderlichen Druckmittel zu versorgen. Für eine Anwendung mit koaxial zueinander verlaufender Antriebs- und Abtriebswelle ist es in diesem Fall zweckmäßig, dass der erste Planetenradsatz der dem Antrieb des Automatgetriebes zugewandte Planetenradsatz der Planetenradsatzgruppe ist.

In Verbindung mit der Planetenradsatz-Reihenfolge "erster, vierter, zweiter, dritter Planetenradsatz" wird als vorteilhafte räumliche Anordnung der Schaltelemente vorgeschlagen,
- das erste Schaltelement räumlich gesehen auf derjenigen Seite des ersten Planetenradsatzes anzuordnen, die dem vierten Planetenradsatz abgewandt ist;
- je nach kinematischer Anbindung des zweiten Schaltelementes an die anderen Getriebekomponenten, das zweite Schaltelement zumindest teilweise in einem Bereich radial über dem ersten Planetenradsatz anzuordnen, oder alternativ axial benachbart zum ersten Planetenradsatz auf der dem vierten Planetenradsatz abgewandten Seite des ersten Planetenradsatzes, oder alternativ in einem Bereich axial zwischen dem ersten und vierten Planetenradsatz, oder alternativ axial benachbart zum dritten Planetenradsatz in einem Bereich axial zwischen dem zweiten und dritten Planetenradsatz, oder alternativ zumindest teilweise in einem Bereich radial über dem dritten Planetenradsatz, oder alternativ in einem Bereich axial zwischen dem zweiten und dritten Planetenradsatz, oder alternativ in einem Bereich radial unterhalb des fünften und/oder sechsten Schaltelementes, oder alternativ axial benachbart zum dritten Planetenradsatz, oder alternativ als Klauenkupplung ausgeführt zumindest teilweise in einem Bereich zentrisch innerhalb des ersten Elementes des ersten Planetenradsatzes, oder alternativ als Klauenkupplung ausgeführt zumindest teilweise in einem Bereich zentrisch innerhalb des ersten Elementes des dritten Planetenradsatzes;
- das dritte Schaltelement axial benachbart zum zweiten Planetenradsatz in einem Bereich axial zwischen dem zweiten und dritten Planetenradsatz anzuordnen;
- das vierte Schaltelement axial benachbart zum dritten Planetenradsatz in einem Bereich axial zwischen dem zweiten und dritten Planetenradsatz anzuordnen, oder alternativ in einem Bereich axial zwischen dem zweiten und vierten Planetenradsatz vorzugsweise axial benachbart zum zweiten Planetenradsatz;
- das fünfte Schaltelement in einem Bereich axial zwischen dem zweiten und vierten Planetenradsatz anzuordnen;
- das sechste Schaltelement in einem Bereich axial zwischen dem zweiten und vierten Planetenradsatz anzuordnen;
- sofern vorhanden, das siebte Schaltelement in einem Bereich axial zwischen dem ersten und vierten Planetenradsatz anzuordnen, oder alternativ in einem Bereich radial über dem vierten Planetenradsatz, oder alternativ in einem Bereich axial zwischen dem vierten und zweiten Planetenradsatz.

Selbstverständlich sind auch andere räumliche Anordnungen der vier Planetenradsätze und der sechs bzw. sieben Schaltelemente im Gehäuse des Automatgetriebes möglich. Beispielsweise können die vier Planetenradsätze koaxial zueinander nebeneinander in der definierten Reihenfolge "zweiter, vierter, erster, dritter Planetenradsatz" angeordnet sein, wobei es in diesem Fall für eine Anwendung in einem Fahrzeug mit so genanntem "Standard-Antrieb" zweckmäßig ist, den zweiten Planetenradsatz der Antriebsseite des Automatgetriebes zuzuwenden, während es für eine Anwendung in einem Fahrzeug mit so genanntem "Front-Quer-Antrieb" zweckmäßig ist, den dritten Planetenradsatz der Antriebsseite des Automatgetriebes zuzuwenden.

Alle vorgeschlagenen Ausführungen und Ausgestaltungen für ein Automatgetriebe gemäß der Erfindung weisen insbesondere für Personenkraftwagen in der Praxis brauchbare Übersetzungen mit sehr großer Gesamtspreizung in hinsichtlich der Fahrbarkeit vertretbarer Gangabstufung auf, was sich auf den angestrebt niedrigen Kraftstoffverbrauch positiv auswirkt. Darüber hinaus zeichnet sich das erfindungsgemäße Automatgetriebe durch eine gemessen an der Gangzahl geringe Anzahl an Schaltelementen und einen vergleichsweise geringen Bauaufwand aus. Weiterhin ergibt sich bei dem erfindungsgemäßen Automatgetriebe in allen Gängen ein guter Wirkungsgrad, einerseits infolge geringer Schleppverluste, da in jedem Gang jeweils vier der Schaltelemente im Eingriff sind, andererseits auch infolge geringer Verzahnungsverluste in den einfach aufgebauten Einzel-Planetenradsätzen.

In vorteilhafter Weise ist es mit dem erfindungsgemäßen Automatgetriebe möglich, ein Anfahren des Kraftfahrzeugs sowohl mit einem getriebeexternen Anfahrelement als auch mit einem getriebeinternen Reibschaltelement zu realisieren. Ein getriebeexternes Anfahrelement kann in an sich bekannter Weise beispielsweise als hydrodynamischer Wandler, als so genannte trockene Anfahrkupplung, als so genannte nasse Anfahrkupplung, als Magnetpulverkupplung oder als Fliehkraftkupplung ausgebildet sein. Alternativ zur Anordnung eines derartigen Anfahrelement in Kraftflussrichtung zwischen Antriebsmotor und Getriebe kann das getriebeexterne Anfahrelement in Kraftflussrichtung auch hinter dem Getriebe angeordnet sein, wobei in diesem Fall die Antriebswelle des Getriebes ständig verdrehfest oder verdrehelastisch mit der Kurbelwelle des Antriebsmotors verbunden ist. Als getriebeinternes Anfahrelement eignen sich beispielsweise das erste und zweite Schaltelement, insbesondere das in vielen Vorwärtsgängen und im Rückwärtsgang drehmomentführende zweite Schaltelement.

Außerdem ist das erfindungsgemäße Automatgetriebe derart konzipiert, dass eine Anpassbarkeit an unterschiedliche Triebstrangausgestaltungen sowohl in Kraftflussrichtung als auch in räumlicher Hinsicht ermöglicht wird. So können sich bei gleichem Getriebeschema, je nach Standgetriebeübersetzung der einzelnen Planetensätze, unterschiedliche Gangsprünge ergeben, so dass eine anwendungs- bzw. fahrzeugspezifische Variation ermöglicht wird. Weiterhin ist es ohne besondere konstruktive Maßnahmen möglich, Antrieb und Abtrieb des Getriebes wahlweise koaxial oder achsparallel zueinander anzuordnen. Auf der Antriebsseite oder auf der Abtriebsseite des Getriebes können ein Achsdifferential und/oder ein Verteilerdifferential angeordnet werden. Es ist zudem möglich, an jeder geeigneten Stelle des Mehrstufengetriebes zusätzliche Freiläufe vorzusehen, beispielsweise zwischen einer Welle und dem Gehäuse oder um zwei Wellen gegebenenfalls zu verbinden. Auch kann auf jeder Welle, bevorzugt auf der Antriebswelle oder auf der Abtriebswelle, eine verschleißfreie Bremse, wie z.B. ein hydraulischer oder elektrischer Retarder oder dergleichen, angeordnet sein, welche insbesondere für den Einsatz in Nutzkraftfahrzeugen von besonderer Bedeutung ist. Auch kann zum Antrieb von zusätzlichen Aggregaten auf jeder Welle, bevorzugt auf der Antriebswelle oder der Abtriebswelle, ein Nebenabtrieb vorgesehen sein. Ein weiterer Vorteil des erfindungsgemäßen Automatgetriebes besteht darin, dass an jeder Welle zusätzlich eine elektrische Maschine als Generator und/oder als zusätzliche Antriebsmaschine anbringbar ist.

Die eingesetzten Schaltelemente können als lastschaltende Kupplungen oder Bremsen ausgebildet sein. Insbesondere können kraftschlüssige Kupplungen oder Bremsen -wie z.B. Lamellenkupplungen, Bandbremsen und/oder Konuskupplungen - verwendet werden. Als Schaltelemente können aber auch formschlüssige Bremsen und/oder Kupplungen - wie z.B. Synchronisierungen oder Klauenkupplungen - eingesetzt werden.

Die Erfindung wird im Folgenden anhand der Zeichnungen beispielhaft näher erläutert. Gleiche bzw. vergleichbare Bauteile sind dabei auch mit gleichen Bezugszeichen versehen. Es zeigen:
- Figur 1: eine schematische Darstellung eines ersten Ausführungsbeispiels eines erfindungsgemäßen 10-Gang-Automatgetriebes;
- Figur 2: eine schematische Darstellung eines zweiten Ausführungsbeispiels eines erfindungsgemäßen 10-Gang-Automatgetriebes;
- Figur 3: eine schematische Darstellung eines dritten Ausführungsbeispiels eines erfindungsgemäßen 10-Gang-Automatgetriebes;
- Figur 4: eine schematische Darstellung eines vierten Ausführungsbeispiels eines erfindungsgemäßen 10-Gang-Automatgetriebes;
- Figur 5: ein beispielhaftes Schaltschema für die Getriebe gemäß Figur 1 bis Figur 4;
- Figur 6: eine Tabelle mit Varianten der Getriebe gemäß Figur 1 bis Figur 4;
- Figur 7: eine schematische Darstellung einer ersten Alternative zum Getriebe gemäß Figur 1;
- Figur 8: eine schematische Darstellung einer zweiten Alternative zum Getriebe gemäß Figur 1;
- Figur 9: eine schematische Darstellung einer dritten Alternative zum Getriebe gemäß Figur 1;
- Figur 10: eine schematische Darstellung einer ersten Alternative zum Getriebe gemäß Figur 2;
- Figur 11: eine schematische Darstellung einer zweiten Alternative zum Getriebe gemäß Figur 2;
- Figur 12: eine schematische Darstellung einer dritten Alternative zum Getriebe gemäß Figur 2;
- Figur 13: eine schematische Darstellung einer ersten Alternative zum Getriebe gemäß Figur 3;
- Figur 14: eine schematische Darstellung einer zweiten Alternative zum Getriebe gemäß Figur 3;
- Figur 15: eine schematische Darstellung einer dritten Alternative zum Getriebe gemäß Figur 3;
- Figur 16: eine schematische Darstellung einer ersten Alternative zum Getriebe gemäß Figur 4;
- Figur 17: eine schematische Darstellung einer zweiten Alternative zum Getriebe gemäß Figur 4;
- Figur 18: eine schematische Darstellung einer dritten Alternative zum Getriebe gemäß Figur 4;
- Figur 19: eine schematische Darstellung eines ersten Ausführungsbeispiels eines erfindungsgemäßen 11-Gang-Automatgetriebes, abgeleitet aus dem Getriebe gemäß Figur 1;
- Figur 20: eine schematische Darstellung eines zweiten Ausführungsbeispiels eines erfindungsgemäßen 11-Gang-Automatgetriebes, abgeleitet aus dem Getriebe gemäß Figur 2;
- Figur 21: eine schematische Darstellung eines dritten Ausführungsbeispiels eines erfindungsgemäßen 11-Gang-Automatgetriebes, abgeleitet aus dem Getriebe gemäß Figur 3;
- Figur 22: eine schematische Darstellung eines vierten Ausführungsbeispiels eines erfindungsgemäßen 11-Gang-Automatgetriebes, abgeleitet aus dem Getriebe gemäß Figur 4;
- Figur 23: ein beispielhaftes Schaltschema für die Getriebe gemäß Figur 19 bis Figur 23;
- Figur 24: eine Tabelle mit Varianten der Getriebe gemäß Figur 19 bis Figur 23;
- Figur 25: eine schematische Darstellung einer ersten Alternative zum Getriebe gemäß Figur 19;
- Figur 26: eine schematische Darstellung einer zweiten Alternative zum Getriebe gemäß Figur 19;
- Figur 27: eine schematische Darstellung einer ersten Alternative zum Getriebe gemäß Figur 20;
- Figur 28: eine schematische Darstellung einer zweiten Alternative zum Getriebe gemäß Figur 20;
- Figur 29: eine schematische Darstellung einer ersten Alternative zum Getriebe gemäß Figur 21;
- Figur 30: eine schematische Darstellung einer zweiten Alternative zum Getriebe gemäß Figur 21;
- Figur 31: eine schematische Darstellung einer ersten Alternative zum Getriebe gemäß Figur 22; und
- Figur 32: eine schematische Darstellung einer zweiten Alternative zum Getriebe gemäß Figur 22.

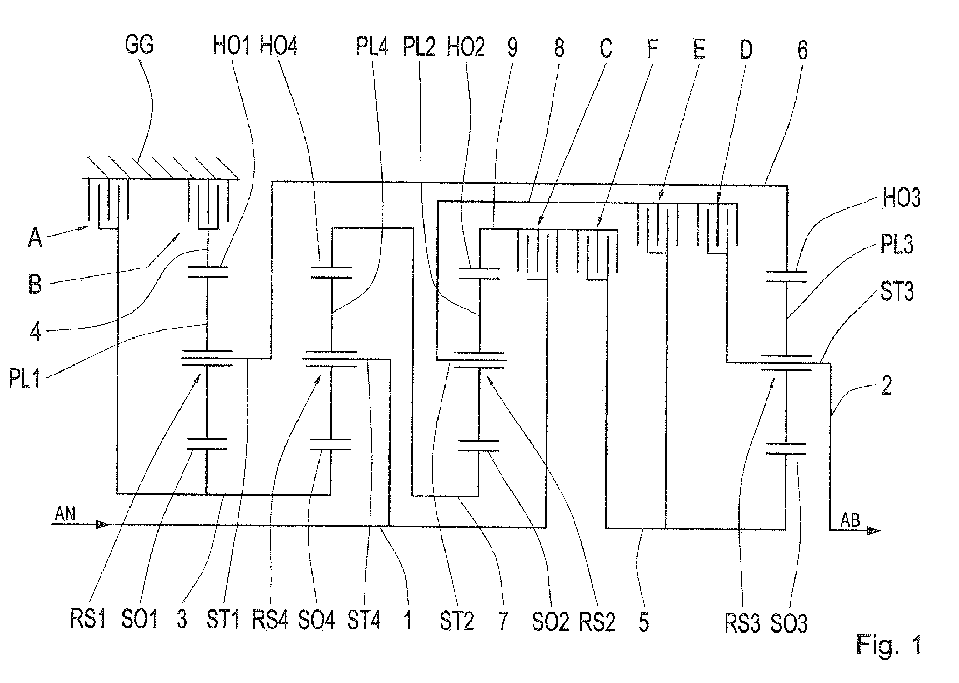

In Figur 1 ist das Radsatzschema eines ersten Ausführungsbeispiels eines erfindungsgemäßen 9-Gang-Automatgetriebes dargestellt. Das Getriebe umfasst inklusive einer Antriebswelle AN und inklusiver einer Abtriebswelle AB neun drehbare Wellen 1 bis 9, vier Planetenradsätze RS1, RS2, RS3, RS4 und sechs Schaltelemente A, B, C, D, E, F, die alle in einem Gehäuse GG des Getriebes angeordnet sind. Alle vier Planetenradsätze RS1, RS2, RS3, RS4 sind als einfache Minus-Planetenradsätze ausgebildet, jeder umfassend ein erstes, ein zweites und ein drittes Element. Ein Minus-Planetenradsatz weist bekanntlich Planetenräder auf, die mit Sonnen- und Hohlrad dieses Planetensatzes kämmen. Die jeweils dritten Elemente der vier Planetenradsätze RS1, RS2, RS3, RS4 sind alle als Hohlräder ausgebildet und mit H01, H02, H03 und H04 bezeichnet. Die jeweils ersten Elemente der vier Planetenradsätze RS1, RS2, RS3, RS4 sind alle als Sonnenräder ausgebildet und mit SO1, S02, S03 und S04 bezeichnet. Die jeweils zweiten Elemente der vier Planetenradsätze RS1, RS2, RS3, RS4 sind alle als Planetenradträger ausgebildet und mit ST1, ST2, ST3 und ST4 bezeichnet. Die an den Planetenradträgern ST1, ST2, ST3 und ST4 rotierbar gelagerten Planetenräder sind mit PL1, PL2, PL3 und PL4 bezeichnet.

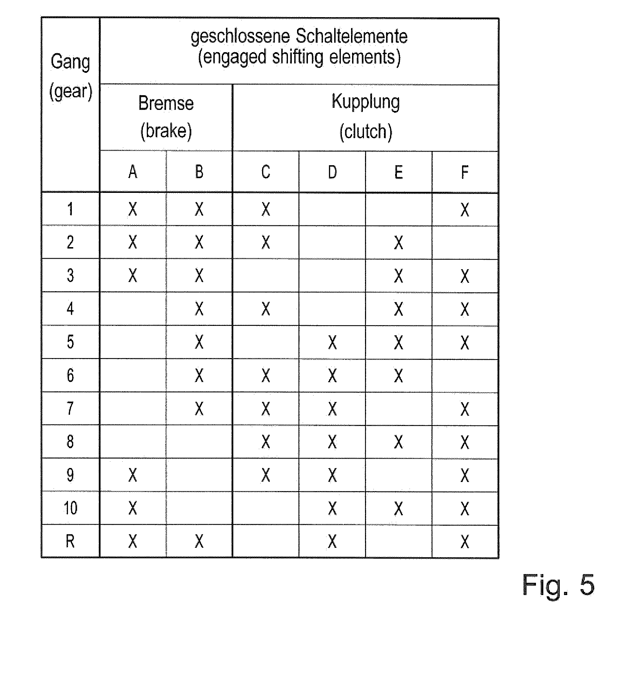

Die Schaltelemente A und B sind als Bremsen ausgebildet, die im dargestellten Ausführungsbeispiel beide als reibschlüssig schaltbare Lamellenbremse ausgeführt sind, in einer anderen Ausgestaltung auch als reibschlüssig schaltbare Bandbremse oder beispielsweise auch als formschlüssig schaltbare Klauen- oder Konusbremse ausgeführt sein können. Die anderen Schaltelemente C, D, E und F sind als Kupplungen ausgebildet, die im dargestellten Ausführungsbeispiel alle als reibschlüssig schaltbare Lamellenkupplung ausgeführt sind, in einer anderen Ausgestaltung beispielsweise auch als formschlüssig schaltbare Klauen- oder Konuskupplung ausgeführt sein können. Mit diesen insgesamt sechs Schaltelementen A bis F ist ein selektives Schalten von zehn Vorwärtsgängen und einem Rückwärtsgang realisierbar, was später anhand Figur 5 noch näher erläutert wird.

Hinsichtlich der Kopplung der einzelnen Elemente der vier Planetenradsätze RS1, RS2, RS3, RS4 untereinander und zur Antriebs- und Abtriebswelle AN, AB ist bei dem Ausführungsbeispiel gemäß Figur 1 folgendes vorgesehen: Der Planetenradträger ST4 des vierten Planetenradsatzes RS4 und die Antriebswelle AN sind verdrehfest oder drehelastisch miteinander verbunden und bilden die mit 1 bezeichnete erste Welle des Automatgetriebes. Der Planetenradträger ST3 des dritten Planetenradsatzes RS3 und die Abtriebswelle AB sind drehfest oder drehelastisch miteinander verbunden und bilden die mit 2 bezeichnete zweite Welle des Automatgetriebes. Das Sonnenrad S01 des ersten Planetenradsatzes RS1 und das Sonnenrad S04 des vierten Planetenradsatzes RS4 sind ständig - in Art einer ersten Koppelwelle - drehfest oder drehelastisch miteinander verbunden. Das Sonnenrad S04 des vierten Planetenradsatzes RS4 bildet hier zusammen mit dem Sonnenrad S01 des ersten Planetenradsatzes RS1 die mit 3 bezeichnete dritte Welle des Automatgetriebes. Das Hohlrad H01 des ersten Planetenradsatzes RS1 bildet die mit 4 bezeichnete vierte Welle des Automatgetriebes. Das Sonnenrad S03 des dritten Planetenradsatzes RS3 bildet die mit 5 bezeichnete fünfte Welle des Automatgetriebes. Der Planetenradträger ST1 des ersten Planetenradsatzes RS1 und das Hohlrad H03 des dritten Planetenradsatzes RS3 sind ständig - in Art einer zweiten Koppelwelle - drehfest oder drehelastisch miteinander verbunden. Das Hohlrad H03 des dritten Planetenradsatzes RS3 bildet hier zusammen mit dem Planetenradträger ST1 des ersten Planetenradsatzes die mit 6 bezeichnete sechste Welle des Automatgetriebes. Das Hohlrad H04 des vierten Planetenradsatzes RS4 und das Sonnenrad S02 des zweiten Planetenradsatzes RS2 sind drehfest oder drehelastisch ständig miteinander verbunden und bilden - in Art einer dritten Koppelwelle - die mit 7 bezeichnete siebte Welle des Automatgetriebes. Der Planetenradträger ST2 des zweiten Planetenradsatzes RS2 bildet die mit 8 bezeichnete achte Welle des Automatgetriebes. Das Hohlrad H02 des zweiten Planetenradsatzes RS2 bildet die mit 9 bezeichnete neunte Welle des Automatgetriebes.

Hinsichtlich der Kopplung der sechs Schaltelemente A bis F an die so beschriebenen neun Wellen 1 bis 9 des Getriebes und an das Gehäuse GG ist bei dem in Figur 1 dargestellten erfindungsgemäßen Automatgetriebe folgendes vorgesehen: Das erste Schaltelement A ist im Kraftfluss zwischen der dritten Welle 3 und dem Gehäuse GG angeordnet. Das zweite Schaltelement B ist im Kraftfluss zwischen der vierten Welle 4 und dem Gehäuse GG angeordnet. Das dritte Schaltelement C ist im Kraftfluss zwischen der ersten Welle 1 und der neunten Welle 9 angeordnet. Das vierte Schaltelement D ist im Kraftfluss zwischen der zweiten Welle 2 und der achten Welle 8 angeordnet. Das fünfte Schaltelement E ist im Kraftfluss zwischen der fünften Welle 5 und der achten Welle 8 angeordnet. Das sechste Schaltelement F ist im Kraftfluss zwischen der fünften Welle 5 und der neunten Welle 9 angeordnet.

Somit ist die erste Welle 1 ständig mit einem Schaltelement (Kupplung C) verbunden, die zweite Welle 2 ständig mit einem Schaltelement (Kupplungen D) verbunden, die dritte Welle 3 ständig mit einem Schaltelement (Bremse A) verbunden, die vierte Welle 4 ständig mit einem Schaltelement (Bremse B) verbunden, die fünfte Welle 5 ständig mit zwei Schaltelementen (Kupplungen E, F) verbunden, die sechste Welle 6 mit keinem der Schaltelemente verbunden, die siebte Welle 7 mit keinem der Schaltelemente verbunden, die achte Welle 8 ständig mit zwei Schaltelementen (Kupplungen D, E) verbunden, die neunte Welle 9 ständig mit zwei Schaltelementen (Kupplungen C, F) verbunden.

Somit ist der erste Planetenradsatz RS1 ständig mit zwei Schaltelementen (Bremsen A, B) verbunden, der zweite Planetenradsatz RS2 ständig mit vier Schaltelementen (Kupplungen C, D, E, F) verbunden, der dritte Planetenradsatz RS3 ständig mit drei Schaltelementen (Kupplungen D, E, F) verbunden, und der vierte Planetenradsatz RS4 ständig mit zwei Schaltelementen (Bremse A, Kupplung C) verbunden.

Durch gleichzeitiges Schließen der (in Kraftflussrichtung gesehen in Reihe hintereinander angeordneten) Kupplungen E und F ist der zweite Planetenradsatz RS2 verblockbar. Im verblockten Zustand sind hier dann Planetenradträger ST2 und Hohlrad H02 miteinander verbunden, mit der Folge, dass dann Sonnenrad S02, Planetenradträger ST2 und Hohlrad H02 mit gleicher Drehzahl rotieren. Durch gleichzeitiges Schließen der (in Kraftflussrichtung gesehen in Reihe hintereinander angeordneten) Kupplungen D und E ist der dritte Planetenradsatz RS3 verblockbar. Im verblockten Zustand sind hier dann Planetenradträger ST3 und Sonnenrad S03 miteinander verbunden, mit der Folge, dass dann Sonnenrad S03, Planetenradträger ST3 und Hohlrad H03 mit gleicher Drehzahl rotieren. Durch gleichzeitiges Schließen der (in Kraftflussrichtung gesehen in Reihe hintereinander angeordneten) Kupplungen C und F ist die erste Welle 1 mit der fünften Welle 5 verbindbar, sodass dann das Sonnenrad S03 des dritten Planetenradsatzes RS3 (zusammen mit dem Hohlrad H02 des zweiten Planetenradsatzes RS2) mit Drehzahl der Antriebswelle AN rotiert.

In dem in Figur 1 dargestellten Ausführungsbeispiel sind die vier Planetenradsätze RS1, RS2, RS3, RS4 in axialer Richtung gesehen in der definierten Reihenfolge "RS1, RS4, RS2, RS3" koaxial hintereinander angeordnet, wobei Antriebswelle AN und Abtriebswelle AB koaxial zueinander angeordnet sind und der erste Planetenradsatz RS1 den antriebsnahen Radsatz des Automatgetriebes und der dritte Planetenradsatz RS3 den abtriebsnahen Radsatz des Automatgetriebes bildet. Diese Anordnung "RS1, RS4, RS2, RS3" ermöglicht in vorteilhafter Weise, dass die vier Planetenradsätze RS1, RS2, RS3, RS4 jeweils nur von maximal einer Welle des Automatgetriebes in axialer Richtung zentrisch durchgriffen werden.

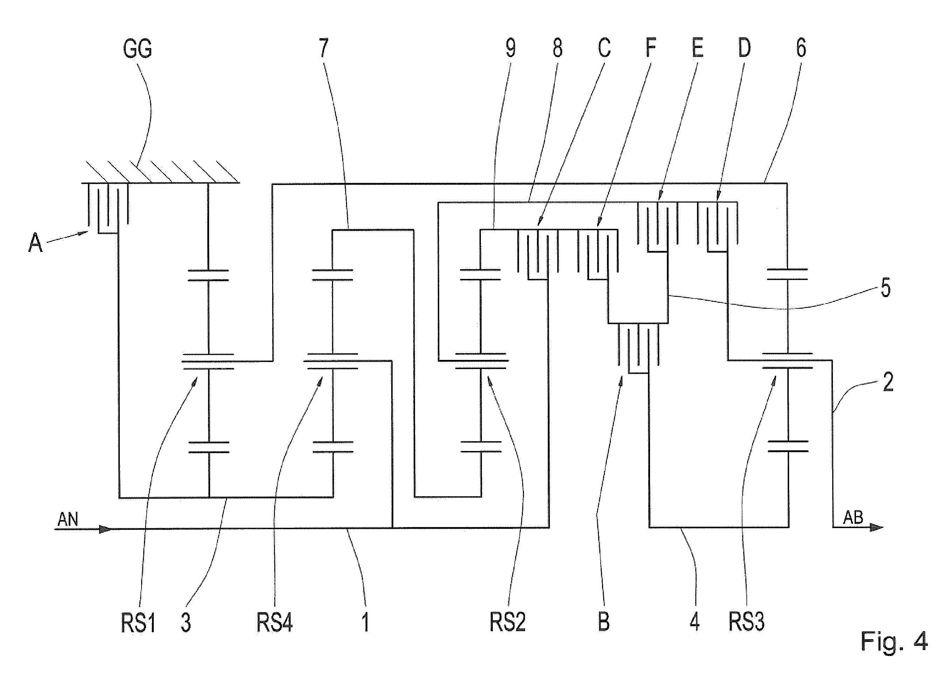

Im Prinzip ist die räumliche Anordnung der Schaltelemente innerhalb des Getriebes beliebig und wird nur durch die Abmessungen und die äußere Formgebung des Getriebegehäuses GG begrenzt. Entsprechend ist die in Figur 1 dargestellte Bauteilanordnung ausdrücklich als nur eine von zahlreichen möglichen Bauteilanordnungs-Varianten zu verstehen. Zahlreiche Anregungen hierzu findet der Fachmann beispielsweise in der bereits erwähnten Schrift DE 10 2005 002 337 A1. Das in Figur 1 dargestellte Ausführungsbeispiel eignet sich aufgrund der schlanken Gehäusestruktur besonders gut für den Einbau in ein Kraftfahrzeug mit so genanntem "Standard-Antrieb". Die in Figur 1 dargestellte Bauteilanordnung basiert auf dem in Figur 4 der DE 10 2005 002 337 A1 offenbarten Automatgetriebe.

Wie aus Figur 1 ersichtlich, grenzen die beiden Planetenradsätze RS1 und RS4 unmittelbar aneinander an. Die Bremse A ist im dargestellten Ausführungsbeispiel räumlich gesehen axial neben dem (auf der Antriebsseite des Getriebegehäuses angeordneten) ersten Planetenradsatzes RS1 angeordnet, auf der Seite des Planetenradsatzes RS1, die dem Planetenradsatz RS4 abgewandt ist. Die Bremse A ist auf einem vergleichsweise großen Durchmesser angeordnet, auf einem Durchmesser größer dem Durchmesser des Hohlrades H01. Mit Druck- und Kühlmittel versorgt werden kann die Bremse A in einfacher Weise vom Gehäuse GG her. Die Bremse A kann konstruktiv einfach in einer antriebsnahen Gehäusewand des Gehäuses GG integriert sein.

Wie aus Figur 1 weiterhin ersichtlich, ist zumindest das Lamellenpaket der Bremse B räumlich gesehen in einem Bereich radial über ersten Planetenradsatzes RS1 angeordnet. Mit Druck- und Schmiermittel versorgt werden kann die Bremse B in einfacher Weise von Gehäuse GG her. Die Bremse B kann konstruktiv einfach in dem Gehäuse GG oder in einer antriebsnahen Gehäusewand des Gehäuses GG integriert sein.

Wie aus Figur 1 weiterhin ersichtlich, sind die vier Kupplungen C, D, E und F räumlich gesehen alle in einem Bereich axial zwischen dem (auf der Abtriebsseite des Getriebegehäuses angeordneten) dritten Planetenradsatz RS3 und dem (dem dritten Planetenradsatz RS3 zugewandten) zweiten Planetenradsatz RS2 angeordnet.

Die beiden Kupplungen C und F sind beispielhaft axial nebeneinander angeordnet, wobei die Kupplung C axial unmittelbar an den zweiten Planetenradsatz RS2 angrenzt. In fertigungstechnisch vorteilhafter Weise ist für diese beiden Kupplungen C und F ein gemeinsamer Lamellenträger vorgesehen, der einen Abschnitt der neunten Welle 9 bildet. In dem dargestellten Ausführungsbeispiel sind die Lamellenpakete der Kupplungen C und F axial nebeneinander auf gleichem Durchmesser angeordnet; in einer Variante kann das Lamellenpaket der Kupplung F in axialer Richtung gesehen aber auch radial über dem Lamellenpaket der Kupplung C angeordnet sein.

Außerdem sind die beiden Kupplungen D und E beispielhaft axial nebeneinander angeordnet, wobei die Kupplung D axial unmittelbar an den dritten Planetenradsatz RS3 angrenzt. In fertigungstechnisch vorteilhafter Weise ist für diese beiden Kupplungen D und E ein gemeinsamer Lamellenträger vorgesehen, der einen Abschnitt der achten Welle 8 bildet. In dem dargestellten Ausführungsbeispiel sind die Lamellenpakete der Kupplungen E und F axial nebeneinander angeordnet; in einer Variante kann das Lamellenpaket der Kupplung D in axialer Richtung gesehen aber auch radial über dem Lamellenpaket der Kupplung E angeordnet sein. In einer anderen Variante kann auch vorgesehen sein, dass das Lamellenpaket der Kupplung E in axialer Richtung gesehen aber auch radial über dem Lamellenpaket der Kupplung F angeordnet ist, oder auch dass das Lamellenpaket der Kupplung E in axialer Richtung gesehen radial über dem Lamellenpaket der Kupplung C angeordnet ist und das Lamellenpaket der Kupplung D in axialer Richtung gesehen radial über dem Lamellenpaket der Kupplung F.

Mit Druck- und Schmiermittel versorgt werden kann die Kupplung C in vorteilhaft einfacher Weise leckageverlustarm von der Antriebswelle AN her. Mit Druck- und Schmiermittel versorgt werden kann die Kupplung D in konstruktiv einfacher Weise leckageverlustarm von der Abtriebswelle AB her über den ständig mit der Abtriebswelle AB verbundenen Planetenradträger ST3 des dritten Planetenradsatzes RS3. Mit Druck- und Schmiermittel versorgt werden können die Kupplungen E und F beispielsweise von der Antriebswelle AN her kommend über einen auf oder in der Antriebswelle AN drehbar gelagerten Abschnitt der Welle 5 oder beispielsweise von der Abtriebswelle AB her kommend über einen auf oder in der Abtriebswelle AB drehbar gelagerten Abschnitt der Welle 5.

Wie bereits angedeutet, ist die in Figur 1 dargestellte räumliche Anordnung der Schaltelemente als beispielhaft zu verstehen. So kann es je nach dem für den Einbau des Getriebes in das Fahrzeug zur Verfügung stehenden Bauraum beispielsweise zweckmäßig sein, einzelne oder mehrere der sechs Schaltelemente anders anzuordnen als in dem hier dargestellten Ausführungsbeispiel.

Wie aus Figur 1 weiterhin ersichtlich, werden die Planetenradsätze RS1, RS4 und RS2 jeweils nur von der Antriebswelle AN (bzw. Welle 1) in axialer Richtung zentrisch vollständig durchgriffen. Dies ist vorteilhaft für die Dimensionierung der Antriebswelle AN und der Radsätze, aber auch vorteilhaft für die konstruktive Ausgestaltung der Schmiermittelzuführung zu den Planetenrädern der Planetenradsätze und für die konstruktive Ausgestaltung der Druck- und Schmiermittelzuführung zu den Kupplungen. In ihrem axialen Verlauf durchgreift die Antriebswelle AN dabei die dritte Welle 3 und die siebte Welle 7 zentrisch. Wie aus Figur 1 weiterhin ersichtlich, übergreift die Welle 6 des Getriebes, die ja die Wirkverbindung zwischen dem Planetenradträger ST1 des (auf der Antriebsseite des Getriebegehäuses angeordneten) ersten Planetenradsatzes RS1 und dem Hohlrad H03 des (auf der Abtriebsseite des Getriebegehäuses angeordneten) dritten Planetenradsatzes RS3 bildet, in ihrem axialen Verlauf den zweiten und vierten Planetenradsatz RS2, RS4 sowie die vier Kupplungen E, F, C, D vollständig.Die Welle 8 verläuft zentrisch innerhalb der Welle 6, während die Welle 9 zentrisch innerhalb der Welle 9 verläuft.

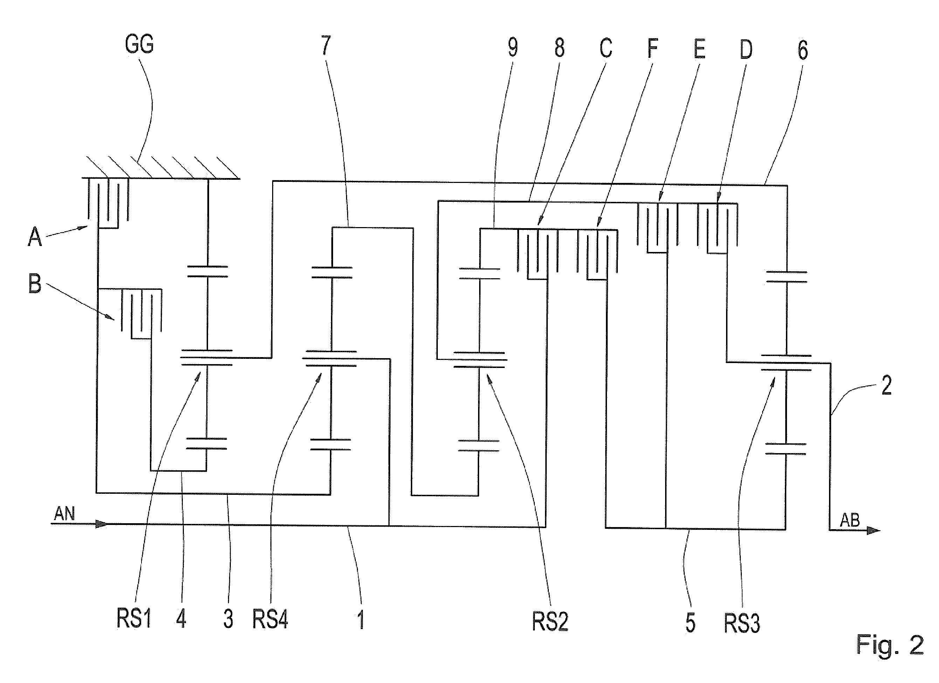

In Figur 2 ist das Radsatzschema eines zweiten Ausführungsbeispiels eines erfindungsgemäßen 10-Gang-Automatgetriebes dargestellt., abgeleitet aus dem Getriebeschema gemäß Figur 1. Die Unterschiede zu dem Getriebeschema gemäß Figur 1 betreffen lediglich die kinematische Ankopplung des ersten Planetenradsatzes RS1 und des zweiten Schaltelementes B an die anderen Getriebekomponenten.

Wie in Figur 2 ersichtlich, ist nunmehr das Hohlrad H01 des ersten Planetenradsatzes RS1 ständig drehfest oder drehelastisch mit dem Gehäuse GG verbunden. Ähnlich wie in Figur 1 bildet das Sonnenrad S04 des vierten Planetenradsatzes RS4 die dritte Welle 3 des Automatgetriebes. Nunmehr bildet das Sonnenrad S01 des ersten Planetenradsatzes RS1 die ständig mit dem zweiten Schaltelement B verbundene vierte Welle 4 des Automatgetriebes. Diese vierte Welle 4 ist über das jetzt als Kupplung ausgebildete zweite Schaltelement B nunmehr mit der dritten Welle 3 des Automatgetriebes verbindbar. Wie in Figur 1 ist das Hohlrad H03 des dritten Planetenradsatzes RS3 als sechste Welle 6 des Automatgetriebes ständig mit dem Planetenradträger ST1 des ersten Planetenradsatzes RS1 verbunden. Im Unterschied zu dem Automatgetriebe gemäß Figur 1 ist bei dem Automatgetriebe gemäß Figur 2 das zweite Schaltelement also im Kraftfluss zwischen der vierten Welle 4 (jetzt Sonnenrad SO1 des ersten Planetenradsatzes RS1) und der dritten Welle 3 (Sonnenrad S04 des vierten Planetenradsatzes RS4) angeordnet. Somit sind die Sonnenräder S01 und S04 durch Schließen des zweiten Schaltelementes B miteinander verbindbar, während die Sonnenräder S01 und S04 durch gleichzeitiges Schließen des ersten Schaltelementes A und zweiten Schaltelementes B zusammen an dem Gehäuse GG festsetzbar sind.

Damit weist das Automatgetriebe gemäß Figur 2 im Unterschied zu dem Automatgetriebe gemäß Figur 1 nur zwei Koppelwellen auf, über die die einzelnen Planetenradsätze miteinander ständig verbunden sind, nämlich die bereits erwähnte sechste Welle 6 zur ständigen Kopplung des Planetenradträgers des ersten Planetenradsatzes RS1 mit dem Hohlrad H03 des dritten Planetenradsatzes RS3, sowie die siebte Welle 7 zur ständigen Kopplung des Sonnenrads S02 des zweiten Planetenradsatzes RS2 mit dem Hohlrad H04 des vierten Planetenradsatzes RS4.

Wie in Figur 2 weiterhin ersichtlich, sind alle vier Planetenradsätze RS1 bis RS4 wie in Figur 1 als einfache Minus-Planetenradsätze ausgebildet und räumlich gesehen koaxial nebeneinander mit der definierten Reihenfolge "erster, vierter, zweiter, dritter Planetenradsatz" (also Anordnung "RS1-RS4-RS2-RS3") angeordnet. Auch die räumliche Anordnung des als Bremse ausgeführten Schaltelementes A und die räumliche Anordnung der als Kupplung ausgeführten vier Schaltelemente C bis F wurde aus Figur 1 unverändert übernommen.

Im Unterschied zu Figur 1 sind nunmehr die Bremse A und die Kupplung B räumlich gesehen axial neben dem ersten Planetenradsatzes RS1 angeordnet, auf der Seite des Planetenradsatzes RS1, die dem Planetenradsatz RS4 abgewandt ist. Die Bremse A ist unverändert auf einem vergleichsweise großen Durchmesser im Bereich des Außendurchmessers des Gehäuses GG angeordnet und kann in einfacher Weise von Gehäuse GG her mit Druck- und Kühlmittel versorgt werden. Räumlich gesehen ist die Kupplung B axial zwischen dem Innenlamellenträger der Bremse A und dem ersten Planetenradsatz RS1 angeordnet. Mit Druck- und Schmiermittel versorgt werden kann die Kupplung B beispielsweise von der Antriebswelle AN her über die die Antriebswelle AN radial umschließende dritte Welle 3.

Ist die Kupplung B in Abweichung zu Figur 2 als Klauenkupplung ausgebildet, so kann sie räumlich gesehen auch zumindest teilweise zentrisch innerhalb des Sonnenrads S01 des ersten Planetenradsatzes RS1 angeordnet sein und dabei einen Abschnitt der dritten Welle 3 radial umschließen.

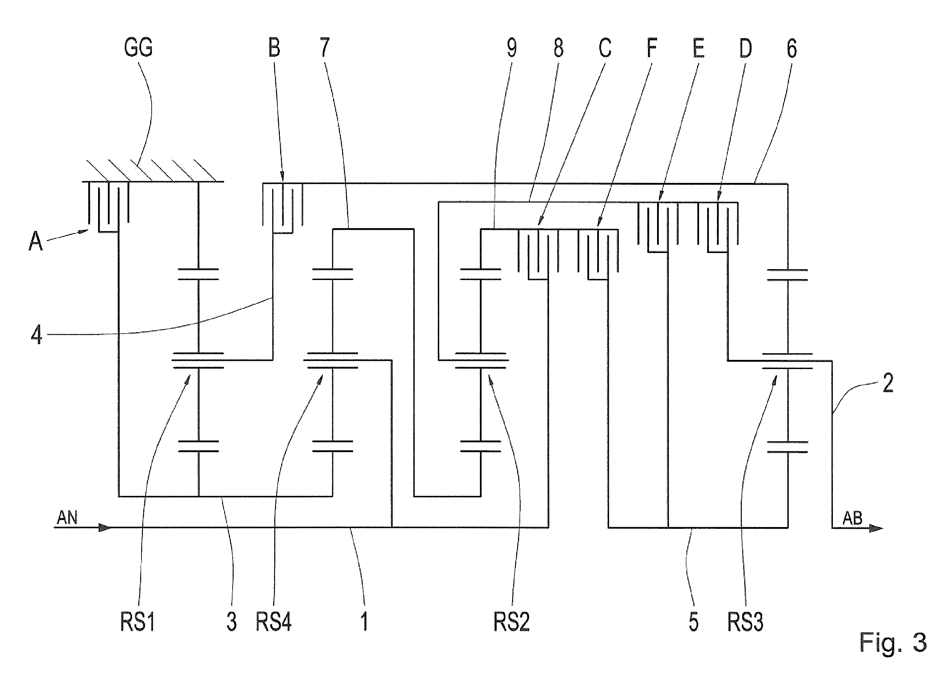

In Figur 3 ist das Radsatzschema eines dritten Ausführungsbeispiels eines erfindungsgemäßen 10-Gang-Automatgetriebes dargestellt, ebenfalls abgeleitet aus dem Getriebeschema gemäß Figur 1. Die Unterschiede zu dem Getriebeschema gemäß Figur 1 betreffen wiederum nur die kinematische Ankopplung des ersten Planetenradsatzes RS1 und des zweiten Schaltelementes B an die anderen Getriebekomponenten.

Wie in Figur 3 ersichtlich, ist nunmehr das Hohlrad H01 des ersten Planetenradsatzes RS1 ständig drehfest oder drehelastisch mit dem Getriebegehäuse GG verbunden. Wie in Figur 1 ist das Sonnenrad S04 des vierten Planetenradsatzes RS4 als dritte Welle 3 des Automatgetriebes ständig mit dem Sonnenrad S01 des ersten Planetenradsatzes RS1 verbunden, sodass die Sonnenräder S01 und S04 durch Schließen des ersten Schaltelementes A zusammen an dem Gehäuse GG festsetzbar sind. Nunmehr bildet der Planetenradträger ST1 des ersten Planetenradsatzes RS1 die ständig mit dem zweiten Schaltelement B verbundene vierte Welle 4 des Automatgetriebes. Diese vierte Welle 4 ist über das jetzt als Kupplung ausgebildete zweite Schaltelement B nunmehr mit der sechsten Welle 6 des Automatgetriebes verbindbar, wobei die sechste Welle 6 ihrerseits durch das Hohlrad H03 des dritten Planetenradsatzes RS3 gebildet wird. Im Unterschied zu dem Automatgetriebe gemäß Figur 1 ist bei dem Automatgetriebe gemäß Figur 3 das zweite Schaltelement also im Kraftfluss zwischen der vierten Welle 4 (jetzt Planetenradträger ST1 des ersten Planetenradsatzes RS1) und der sechsten Welle 6 (Hohlrad H03 des dritten Planetenradsatzes RS3) angeordnet.

Damit weist das Automatgetriebe gemäß Figur 3 im Unterschied zu dem Automatgetriebe gemäß Figur 1 nur zwei Koppelwellen auf, über die die einzelnen Planetenradsätze miteinander ständig verbunden sind, nämlich die bereits erwähnte dritte Welle 3 zur ständigen Kopplung des Sonnenrades S01 des ersten Planetenradsatzes RS1 mit dem Sonnenrad S04 des vierten Planetenradsatzes RS4, sowie die siebte Welle 7 zur ständigen Kopplung des Sonnenrades S02 des zweiten Planetenradsatzes RS2 mit dem Hohlrad H04 des vierten Planetenradsatzes RS4.

Wie in Figur 3 weiterhin ersichtlich, sind alle vier Planetenradsätze RS1 bis RS4 wie in Figur 1 als einfache Minus-Planetenradsätze ausgebildet und räumlich gesehen koaxial nebeneinander mit der definierten Reihenfolge "erster, vierter, zweiter, dritter Planetenradsatz" (also Anordnung "RS1-RS4-RS2-RS3") angeordnet. Auch die räumliche Anordnung des als Bremse ausgeführten Schaltelementes A und die räumliche Anordnung der als Kupplung ausgeführten vier Schaltelemente C bis F wurde aus Figur 1 unverändert übernommen.

Im Unterschied zu Figur 1 ist die Kupplung B räumlich gesehen in einem Bereich axial zwischen dem ersten Planetenradsatzes RS1 und vierten Planetenradsatz RS4 angeordnet. Mit Druck- und Schmiermittel versorgt werden kann die Kupplung B beispielsweise von der Antriebswelle AN her über die die Antriebswelle AN radial umschließende dritte Welle 3 und den die dritte Welle 3 radial umschließenden Planetenradträger ST1 des ersten Planetenradsatzes RS1.

Ist die Kupplung B in Abweichung zu Figur 3 als Klauenkupplung ausgebildet, so kann sie räumlich gesehen auch auf kleinem Durchmesser im Bereich axial zwischen den Sonnenrädern S01 und S04 angeordnet sein und dabei diesen Abschnitt der dritten Welle 3 radial umschließen.

In Figur 4 ist das Radsatzschema eines vierten Ausführungsbeispiels eines erfindungsgemäßen 10-Gang-Automatgetriebes dargestellt, ebenfalls abgeleitet aus dem Getriebeschema gemäß Figur 1. Die Unterschiede zu dem Getriebeschema gemäß Figur 1 betreffen wiederum nur die kinematische Ankopplung des ersten Planetenradsatzes RS1 und des zweiten Schaltelementes B an die anderen Getriebekomponenten.

Wie in Figur 4 ersichtlich, ist nunmehr das Hohlrad H01 des ersten Planetenradsatzes RS1 ständig drehfest oder drehelastisch mit dem Gehäuse GG verbunden. Wie in Figur 1 ist das Sonnenrad S04 des vierten Planetenradsatzes RS4 als dritte Welle 3 des Automatgetriebes ständig mit dem Sonnenrad S01 des ersten Planetenradsatzes RS1 verbunden, sodass die Sonnenräder S01 und S04 durch Schließen des ersten Schaltelementes A zusammen an dem Getriebegehäuse GG festsetzbar sind. Nunmehr bildet das Sonnenrad S03 des dritten Planetenradsatzes RS3 die ständig mit dem zweiten Schaltelement B verbundene vierte Welle 4 des Automatgetriebes. Diese vierte Welle 4 ist über das jetzt als Kupplung ausgebildete zweite Schaltelement B nunmehr mit der fünften Welle 5 des Automatgetriebes verbindbar, wobei die fünfte Welle 5 ihrerseits jetzt keine ständige Verbindung zu einem der Planetenradsatzelemente aufweist. Wie in Figur 1 ist das Hohlrad H03 des dritten Planetenradsatzes RS3 als sechste Welle 6 des Automatgetriebes ständig mit dem Planetenradträger ST1 des ersten Planetenradsatzes RS1 verbunden. Im Unterschied zu dem Automatgetriebe gemäß Figur 1 ist bei dem Automatgetriebe gemäß Figur 4 das zweite Schaltelement also im Kraftfluss zwischen der vierten Welle 4 (jetzt Sonnenrad S03 des dritten Planetenradsatzes RS3) und der fünften Welle 5 (jetzt ohne direkte Verbindung zu einem der Planetenradsatzelemente) angeordnet. Hierdurch ist die erste Welle 1 (Antriebswelle AN) durch gleichzeitiges Schließen des dritten und sechsten Schaltelementes C, F zwar nach wie vor mit der fünften Welle 5 verbindbar, damit jedoch auch das Sonnenrad S03 (jetzt vierte Welle 4) des dritten Planetenradsatzes RS3 mit Drehzahl der Antriebswelle AN rotieren kann, bedarf es des gleichzeitigen Schließens des zweiten, dritten und sechsten Schaltelementes B, C, F.

Damit weist das Automatgetriebe gemäß Figur 4 die gleichen drei Koppelwellen auf wie das Automatgetriebe gemäß Figur 1, nämlich die dritte, sechste und siebte Welle 3, 6, 7.

Wie in Figur 4 weiterhin ersichtlich, sind alle vier Planetenradsätze RS1 bis RS4 wie in Figur 1 als einfache Minus-Planetenradsätze ausgebildet und räumlich gesehen koaxial nebeneinander mit der definierten Reihenfolge "erster, vierter, zweiter, dritter Planetenradsatz" (also Anordnung "RS1-RS4-RS2-RS3") angeordnet. Auch die räumliche Anordnung des als Bremse ausgeführten Schaltelementes A und die räumliche Anordnung der als Kupplung ausgeführten vier Schaltelemente C bis F wurde aus Figur 1 unverändert übernommen.

Im Unterschied zu Figur 1 ist die Kupplung B räumlich gesehen in einem Bereich axial zwischen dem zweiten Planetenradsatzes RS2 und dritten Planetenradsatz RS3 angeordnet, räumlich gesehen in einem Bereich radial unterhalb der Lamellenpakete der beiden Kupplungen E und F. In fertigungstechnisch vorteilhafter Weise ist für diese drei Kupplungen B, E, F ein gemeinsamer Lamellenträger vorgesehen, der die fünfte Welle 5 bildet und hier beispielhaft als Innenlamellenträger der Kupplungen E, F und als Außenlamellenträger der Kupplung B ausgeführt ist. Mit Druck- und Schmiermittel versorgt werden können die drei Kupplungen B, E, F beispielsweise von der Antriebswelle AN her über einen auf oder in der Antriebswelle AN radial gelagerten Abschnitt der fünften Welle 5.

Ist die Kupplung B in Abweichung zu Figur 4 als Klauenkupplung ausgebildet, so kann sie räumlich gesehen auch auf kleinem Durchmesser im Bereich radial unter der Kupplung D axial neben dem Sonnenrad S03 des dritten Planetenradsatzes RS3 angeordnet sein, alternativ auch zumindest teilweise zentrisch innerhalb des Sonnenrads S03 des dritten Planetenradsatzes RS3.

In Figur 5 ist ein beispielhaftes Schaltschema der erfindungsgemäßen 10-Gang-Automatgetriebe gemäß der Figuren 1 bis 4 dargestellt. In jedem Gang sind vier Schaltelemente geschlossen und zwei Schaltelemente offen, was sich - infolge der Minimierung der an geöffneten Reibschaltelementen obligatorisch auftretenden Schleppverluste - auf den Wirkungsgrad des Getriebes sehr positiv auswirkt. Neben der Schaltlogik kann dem Schaltschema auch entnommen werden, dass bei sequentieller Schaltweise - also bei Hoch- oder Zurückschalten um jeweils einen Gang - so genannte Gruppenschaltungen vermieden werden, da zwei in der Schaltlogik benachbarte Gangstufen stets zwei Schaltelemente gemeinsam benutzen. Der achte Vorwärtsgang ist als direkter Gang ausgebildet, sodass zwei so genannte Overdrive-Vorwärtsgänge zur Verfügung stehen.

Selbstverständlich sind die in den Figuren 1 bis 4 zuvor dargestellten Getriebeschemata auch mit einer anderen räumlichen Anordnung der vier Planetenradsätze RS1, RS2, RS3, RS4 darstellbar, ohne die jeweilige Kinematik des Getriebes zu verändern. Ein geeignet alternative räumlichen Anordnung der Planetenradsätze ist beispielsweise die Anordnung vier Planetenradsätze RS1, RS2, RS3, RS4 koaxial nebeneinander mit der definierten Reihenfolge "zweiter, vierter, erster, dritter Planetenradsatz" (also Anordnung "RS2-RS4-RS1-RS3"). Diese Anordnung eignet sich gut für ein Getriebe, bei dem Antriebswelle AN und Abtriebswelle AB nicht koaxial zueinander angeordnet sind, wie die beispielsweise bei einem so genannten Front-Quer-Einbau im Fahrzeug der Fall ist.

Auch haben die in den Figuren 1 bis 4 zuvor vorgeschlagenen räumlichen Anordnungen der Schaltelemente innerhalb des Getriebegehäuses beispielhaften Charakter. Bei Bedarf und je nach den gegebenen baulichen Möglichkeiten wird der Fachmann auch sinnvolle Alternativen für die Anordnung der Schaltelemente realisieren.

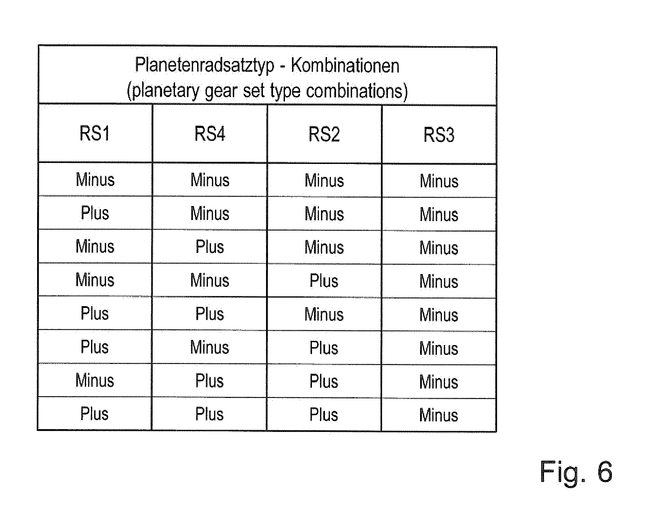

Ausgehend von der Erkenntnis, dass es prinzipiell möglich ist, einen so genannten Minus-Planetenradsatz durch einen kinematisch gleichwertigen Plus-Planetenradsatz zu ersetzen, sofern es die Ankopplung von Sonnenrad, Planetenradträger und Hohlrad dieses Planetenradsatzes an die andern Planetenradsätze und die Schaltelemente und gegebenenfalls an das Gehäuse räumlich zulässt, zeigt Figur 6 eine Tabelle, in der technisch sinnvolle Kombinationen von Planetenradsatztypen für die in den Figuren 1 bis 4 dargestellten Getriebeschemata aufgelistet sind. Alle in der Tabelle aufgelisteten Varianten können über die in Figur 5 dargestellte Schaltlogik neun Vorwärtsgänge und einen Rückwärtsgang schalten.

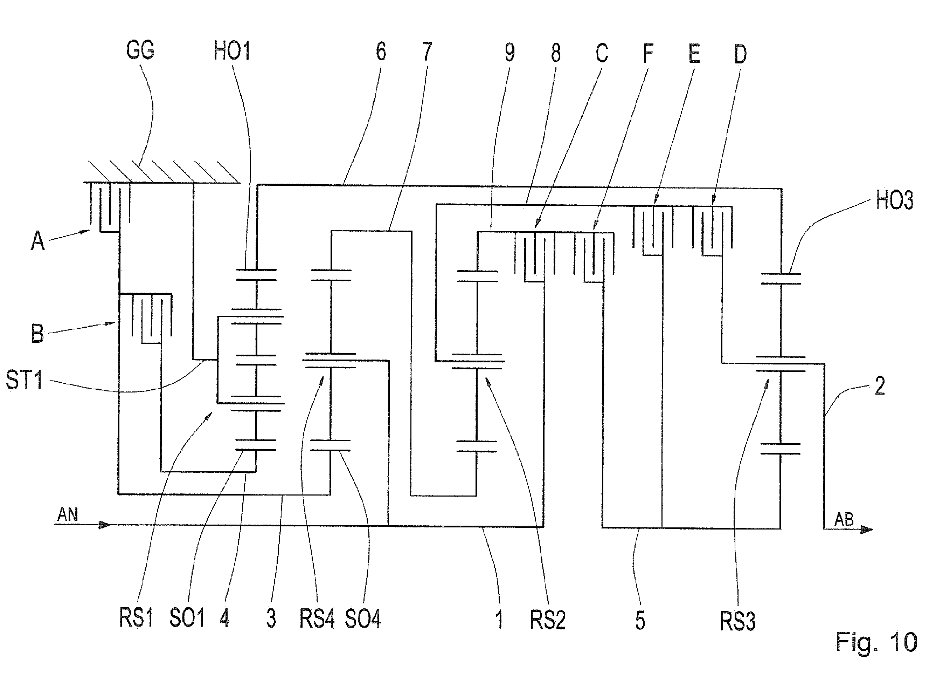

Bekanntlich ist bei einem Minus-Planetenradsatz jedes seiner Planetenräder sowohl mit dem Sonnenrad und dem Hohlrad in Zahneingriff, während bei einem Plus-Planetenradsatz jedes seiner inneren Planetenräder mit einem seiner äußeren Planetenräder und dem Sonnenrad in Zahneingriff ist und jedes seiner äußeren Planetenräder mit einem seiner inneren Planetenräder und dem Hohlrad in Zahneingriff ist. Aus Figur 10 ersichtlich ist, dass es technisch nicht sinnvoll ist, den ständig mit der Abtriebswelle verbundenen dritten Planetenradsatz RS3 als Plus-Planetenradsatz auszuführen, während die Ausbildung eines oder mehrerer der anderen drei Planetenradsätze RS1, RS2 und RS4 zu technisch brauchbaren Ergebnissen führt. Im Folgenden werden drei Beispiele dieser Variationsmöglichkeiten näher erläutert.

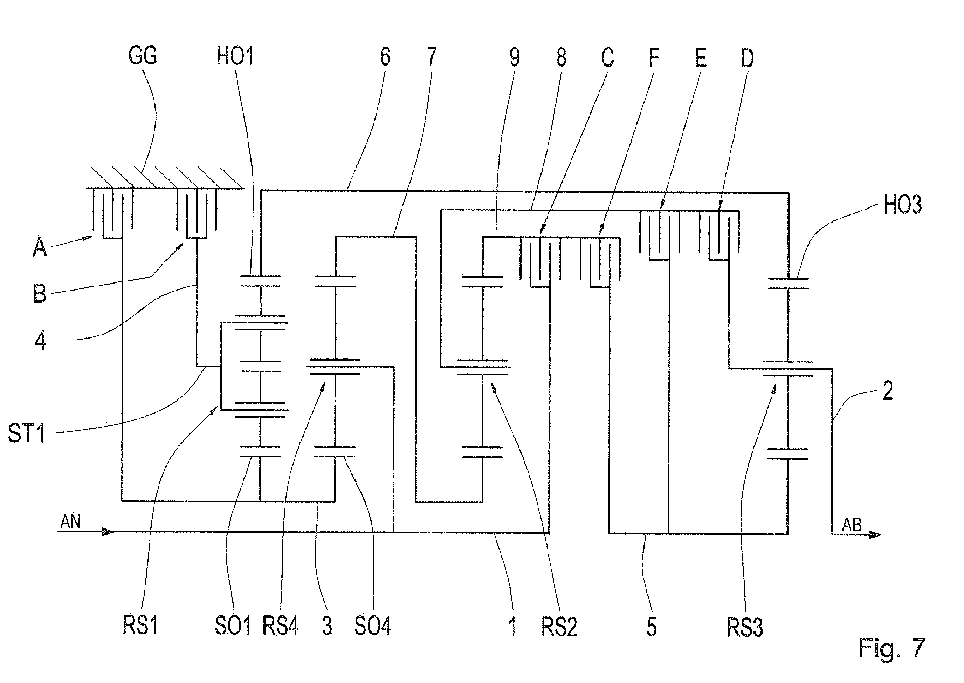

Figur 7 zeigt eine schematische Darstellung einer ersten Alternative zu dem in Figur 1 dargestellten Getriebeschema. Im Unterschied zu dem Getriebeschema gemäß Figur 1, bei dem alle vier Planetenradsätze als MinusPlanetenradsätze ausgeführt sind, ist in dem Getriebeschema gemäß Figur 7 der erste Planetenradsatz RS1 als Plus-Planetenradsatz ausgeführt, während die anderen drei Planetenradsätze RS2, RS3, RS4 unverändert als MinusPlanetenradsätze ausgeführt sind. Räumlich gesehen ist die Abfolge der vier einzelnen, koaxial zueinander nebeneinander angeordneten Planetenradsätze in Figur 7 gegenüber Figur 1 unverändert, ebenso die räumliche Anordnung aller sechs Schaltelemente A bis F, sodass zur Vermeidung von Wiederholungen bei der Erläuterung der Figur 7 nur die wesentlichen Unterschiede zur Figur 1 näher erklärt werden brauchen.

Um die Kinematik des Radsatzsystems gemäß Figur 1 beizubehalten, ist in Figur 7 folgendes vorgesehen: Unverändert bildet das Sonnenrad S01 das erste Element des ersten Planetenradsatzes RS1, welches über die (als erste Koppelwelle fungierende) dritte Welle 3 des Automatgetriebes sowohl mit dem Sonnenrad S04 des vierten Planetenradsatzes RS4 als auch mit der Bremse A ständig direkt verbunden ist, also über diese Bremse A (zusammen mit dem Sonnenrad S04) an dem Gehäuse GG festsetzbar ist. Nunmehr bildet das Hohlrad H01 das zweite Element des ersten Planetenradsatzes RS1, welches über die (als zweite Koppelwelle fungierende) sechste Welle 6 ständig mit dem dritten Element (Hohlrad H03) des dritten Planetenradsatzes RS3 verbunden ist. Nunmehr bildet der Planetenradträger ST1 das dritte Element des ersten Planetenradsatzes RS1, welches ständig direkt mit der Bremse B verbunden und über diese Bremse B an dem Gehäuse GG festsetzbar ist.

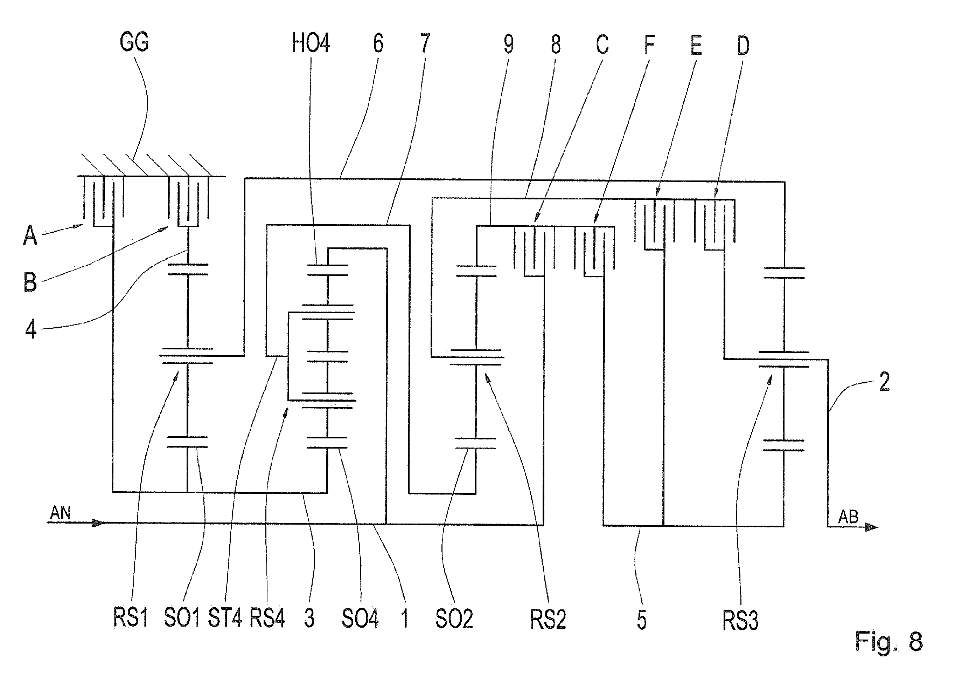

Figur 8 zeigt eine schematische Darstellung einer zweiten Alternative zu dem in Figur 1 dargestellten Getriebeschema. Im Unterschied zu dem Getriebeschema gemäß Figur 1, bei dem alle vier Planetenradsätze als Minus-Planetenradsätze ausgeführt sind, ist in dem Getriebeschema gemäß Figur 8 der vierte Planetenradsatz RS4 als Plus-Planetenradsatz ausgeführt, während die anderen drei Planetenradsätze RS1, RS2, RS3 unverändert als Minus-Planetenradsätze ausgeführt sind. Räumlich gesehen ist die Abfolge der vier einzelnen, koaxial zueinander nebeneinander angeordneten Planetenradsätze in Figur 8 gegenüber Figur 1 unverändert, ebenso die räumliche Anordnung aller sechs Schaltelemente A bis F, sodass zur Vermeidung von Wiederholungen bei der Erläuterung der Figur 8 nur die wesentlichen Unterschiede zur Figur 1 näher erklärt werden brauchen.

Um die Kinematik des Radsatzsystems gemäß Figur 1 beizubehalten, ist in Figur 8 folgendes vorgesehen: Unverändert bildet das Sonnenrad S04 das erste Element des vierten Planetenradsatzes RS4, welches über die (als erste Koppelwelle fungierende) dritte Welle 3 des Automatgetriebes sowohl mit dem Sonnenrad S01 des ersten Planetenradsatzes RS1 als auch mit der Bremse A ständig direkt verbunden ist, also über diese Bremse A (zusammen mit dem Sonnenrad SO1) an dem Gehäuse GG festsetzbar ist. Nunmehr bildet das Hohlrad H04 das zweite Element des vierten Planetenradsatzes RS4, welches als erste Welle 1 des Automatgetriebes als Antriebswelle AN ausgeführt bzw. mit der Antriebswelle AN ständig verbunden ist. Nunmehr bildet der Planetenradträger ST4 das dritte Element des vierten Planetenradsatzes RS4, welches über die (als dritte Koppelwelle fungierende) siebte Welle 7 des Automatgetriebes ständig mit dem ersten Element (Sonnenrad S02) des zweiten Planetenradsatzes RS2 verbunden ist.

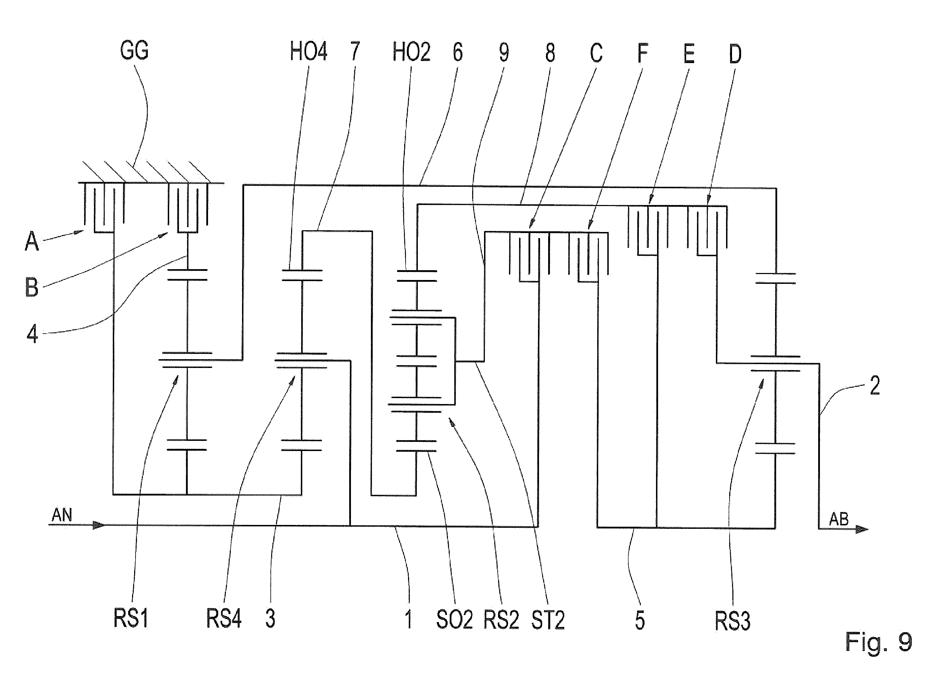

Figur 9 zeigt eine schematische Darstellung einer dritten Alternative zu dem in Figur 1 dargestellten Getriebeschema. Im Unterschied zu dem Getriebeschema gemäß Figur 1, bei dem alle vier Planetenradsätze als Minus-Planetenradsätze ausgeführt sind, ist in dem Getriebeschema gemäß Figur 9 der zweite Planetenradsatz RS2 als Plus-Planetenradsatz ausgeführt, während die anderen drei Planetenradsätze RS1, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 9 gegenüber Figur 1 unverändert, ebenso die räumliche Anordnung aller sechs Schaltelemente A bis F, sodass zur Vermeidung von Wiederholungen bei der Erläuterung der Figur 9 nur die wesentlichen Unterschiede zur Figur 1 näher erklärt werden brauchen.

Um die Kinematik des Radsatzsystems gemäß Figur 1 beizubehalten, ist in Figur 9 folgendes vorgesehen: Unverändert bildet das Sonnenrad S02 das erste Element des zweiten Planetenradsatzes RS2, welches über die (als dritte Koppelwelle fungierende) siebte Welle 7 des Automatgetriebes ständig mit dem dritten Element (Hohlrad H04) des vierten Planetenradsatzes RS4 verbunden ist. Nunmehr bildet das Hohlrad H02 das zweite Element des zweiten Planetenradsatzes RS2, welches als achte Welle 8 des Automatgetriebes ständig mit den Kupplungen D und E verbunden ist, über diese Kupplung D mit der zweiten Welle 2 (Abtriebswelle AB) verbindbar ist und über diese Kupplung E mit der fünften Welle 5 (Sonnenrad S03 des dritten Planetenradsatzes RS3) verbindbar ist. Nunmehr bildet der Planetenradträger ST2 das dritte Element des zweiten Planetenradsatzes RS2, welches als neunte Welle 9 des Automatgetriebes ständig mit den Kupplung C und F verbunden ist, über diese Kupplung C mit der ersten Welle 1 (Antriebswelle AN) verbindbar ist und über diese Kupplung F mit der fünften Welle 5 (Sonnenrad S03 des dritten Planetenradsatzes RS3) verbindbar ist. Soll der zweite Planetenradsatzes RS2 verblockt werden, sodass alle drei Elemente des Planetenradsatzes RS2 mit gleicher Drehzahl rotieren, müssen die in Kraftflussrichtung in Reihe hintereinander angeordneten Kupplungen E und F gleichzeitig geschlossen werden, wodurch dann nunmehr Hohlrad H02 und Planetenradträger ST2 des zweiten Planetenradsatzes RS2 miteinander verbunden werden.

In Kenntnis dieser drei beispielhaft erläuterten Alternativen zu dem in Figur 1 dargestellten Getriebeschema wird der Fachmann problemlos auch die anderen in der Tabelle der Figur 6 aufgelisteten Alternativen mit mehreren Plus-Planetenradsätzen generieren. Zur Beibehaltung des Kinematik des Radsatzsystems muss hierbei lediglich das erste Element jedes Minus-Planetenradsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss.

Die zuvor am Beispiel der Getriebekinematik gemäß Figur 1 erläuterten Möglichkeiten zur Substitution eines der Minus-Planetenradsätze durch einen Plus-Planetenradsatz sind auch auf die Getriebekinematik gemäß Figur 2, die Getriebekinematik gemäß Figur 3 und die Getriebekinematik gemäß Figur 4 übertragbar. Gleiches gilt für die Substitution mehrerer der Minus-Planetenradsätze durch Plus-Planetenradsätze. Nachfolgend soll dies anhand der Figuren 10 bis 18 kurz erläutert werden.

Figur 10 zeigt eine schematische Darstellung einer ersten Alternative zu dem in Figur 2 dargestellten Getriebeschema. Im Unterschied zu dem Getriebeschema gemäß Figur 2, bei dem alle vier Planetenradsätze als Minus-Planetenradsätze ausgeführt sind, ist in dem Getriebeschema gemäß Figur 10 der erste Planetenradsatz RS1 als Plus-Planetenradsatz ausgeführt, während die anderen drei Planetenradsätze RS2, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 10 gegenüber Figur 2 unverändert, ebenso die räumliche Anordnung aller sechs Schaltelemente A bis F, sodass zur Vermeidung von Wiederholungen bei der Erläuterung der Figur 10 nur die wesentlichen Unterschiede zur Figur 2 näher erklärt werden brauchen.

Um die Kinematik des Radsatzsystems gemäß Figur 2 beizubehalten, ist in Figur 10 folgendes vorgesehen: Unverändert bildet das Sonnenrad S01 das erste Element des ersten Planetenradsatzes RS1, welches als vierte Welle 4 des Automatgetriebes ständig und direkt mit der Kupplung B verbunden und über diese Kupplung B mit der dritten Welle 3 des Automatgetriebes verbindbar ist. Das erste Element des vierten Planetenradsatzes RS4 bildet diese dritte Welle 3, die auch mit der Bremse B ständig und direkt verbunden ist. Nunmehr bildet das Hohlrad H01 das zweite Element des ersten Planetenradsatzes RS1, welches über die (als erste Koppelwelle fungierende) sechste Welle 6 ständig mit dem dritten Element (Hohlrad H03) des dritten Planetenradsatzes RS3 verbunden ist. Nunmehr bildet der Planetenradträger ST1 das dritte Element des ersten Planetenradsatzes RS1, welches ständig an dem Gehäuse GG festgesetzt ist.

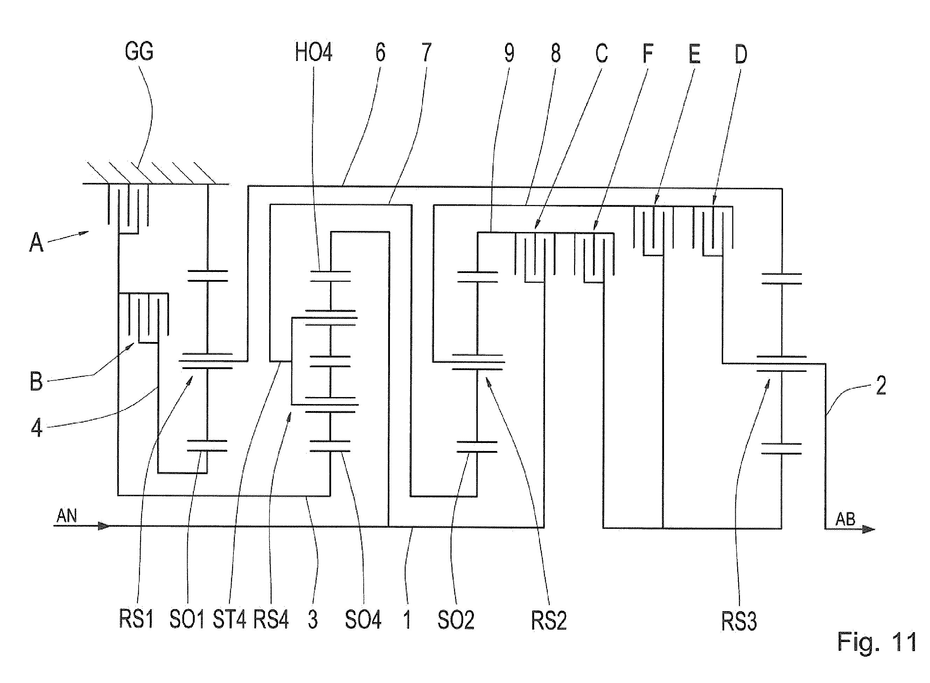

Figur 11 zeigt eine schematische Darstellung einer zweiten Alternative zu dem in Figur 2 dargestellten Getriebeschema. Im Unterschied zu dem Getriebeschema gemäß Figur 2, bei dem alle vier Planetenradsätze als Minus-Planetenradsätze ausgeführt sind, ist in dem Getriebeschema gemäß Figur 11 der vierte Planetenradsatz RS4 als Plus-Planetenradsatz ausgeführt, während die anderen drei Planetenradsätze RS1, RS2, RS3 unverändert als Minus-Planetenradsätze ausgeführt sind. Räumlich gesehen ist die Abfolge der vier einzelnen, koaxial zueinander nebeneinander angeordneten Planetenradsätze in Figur 11 gegenüber Figur 2 unverändert, ebenso die räumliche Anordnung aller sechs Schaltelemente A bis F, sodass zur Vermeidung von Wiederholungen bei der Erläuterung der Figur 11 nur die wesentlichen Unterschiede zur Figur 2 näher erklärt werden brauchen.

Um die Kinematik des Radsatzsystems gemäß Figur 2 beizubehalten, ist in Figur 11 folgendes vorgesehen: Unverändert bildet das Sonnenrad S04 das erste Element des vierten Planetenradsatzes RS4, welches als dritte Welle 3 des Automatgetriebes sowohl mit der Bremse A als auch der Kupplung B ständig direkt verbunden ist, also über diese Bremse A an dem Getriebegehäuse GG festsetzbar ist und über diese Kupplung B mit dem ersten Element (Sonnenrad SO1) des ersten Planetenradsatzes RS1 verbindbar ist. Nunmehr bildet das Hohlrad H04 das zweite Element des vierten Planetenradsatzes RS4, welches als erste Welle 1 des Automatgetriebes als Antriebswelle AN ausgeführt bzw. mit der Antriebswelle AN ständig verbunden ist. Nunmehr bildet der Planetenradträger ST4 das dritte Element des vierten Planetenradsatzes RS4, welches über die (als zweite Koppelwelle fungierende) siebte Welle 7 des Automatgetriebes ständig mit dem ersten Element (Sonnenrad S02) des zweiten Planetenradsatzes RS2 verbunden ist.

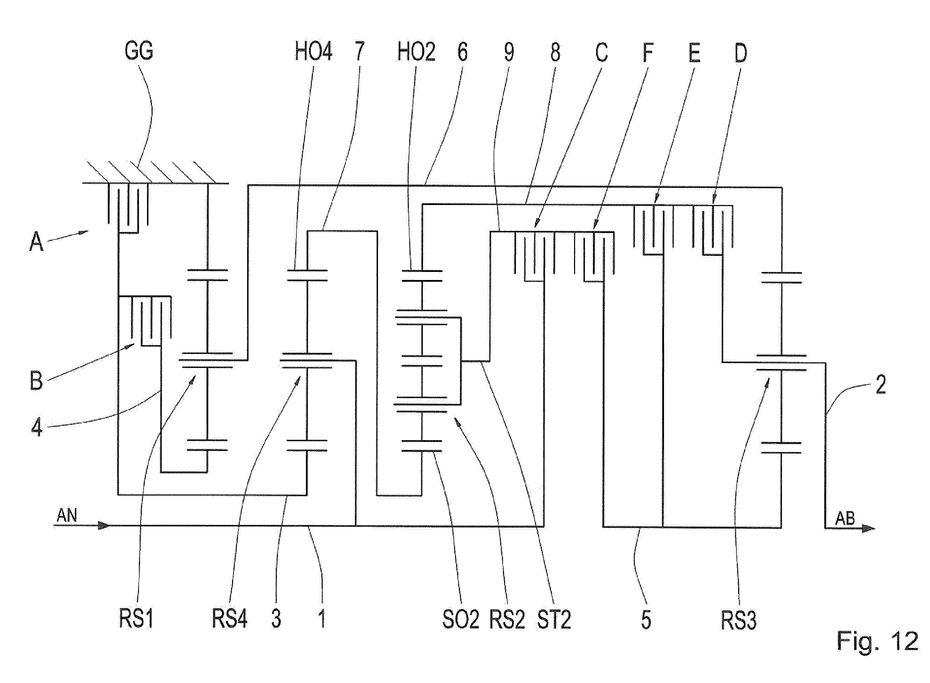

Figur 12 zeigt eine schematische Darstellung einer dritten Alternative zu dem in Figur 2 dargestellten Getriebeschema. Im Unterschied zu dem Getriebeschema gemäß Figur 2, bei dem alle vier Planetenradsätze als Minus-Planetenradsätze ausgeführt sind, ist in dem Getriebeschema gemäß Figur 12 der zweite Planetenradsatz RS2 als Plus-Planetenradsatz ausgeführt, während die anderen drei Planetenradsätze RS1, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 12 gegenüber Figur 2 unverändert, ebenso die räumliche Anordnung aller sechs Schaltelemente A bis F.

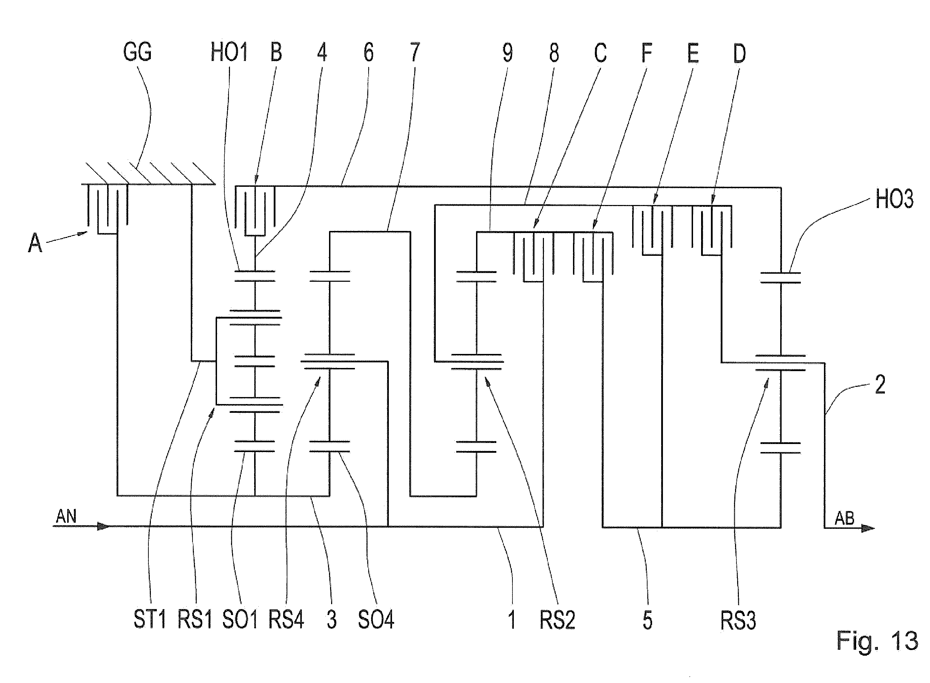

Die durch die Vertauschung der Anbindung von Planetenradträger und Hohlrad des Plus-Planetenradsatzes gegenüber dem Minus-Planetenradsatz bedingten baulichen Anpassungen wurden bereits anhand von Figur 9 erläutert und bedürfen daher an dieser Stelle keiner Wiederholung, bis auf die Hinweise, dass die sechste Welle 6 in dem Getriebeschema gemäß Figur 12 als erste Koppelwelle (und nicht wie in Figur 9 als zweite Koppelwelle) fungiert, und dass die siebte Welle 7 in dem Getriebeschema gemäß Figur 12 als zweite Koppelwelle (und nicht wie in Figur 13 als dritte Koppelwelle) fungiert.

In Kenntnis dieser drei beispielhaft erläuterten Alternativen zu dem in Figur 2 dargestellten Getriebeschema wird der Fachmann problemlos auch die anderen in der Tabelle der Figur 6 aufgelisteten Alternativen mit mehreren Plus-Planetenradsätzen generieren. Zur Beibehaltung des Kinematik des Radsatzsystems muss hierbei lediglich das erste Element jedes Minus-Planetenradsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss.

Figur 13 zeigt eine schematische Darstellung einer ersten Alternative zu dem in Figur 3 dargestellten Getriebeschema. Im Unterschied zu dem Getriebeschema gemäß Figur 3, bei dem alle vier Planetenradsätze als Minus-Planetenradsätze ausgeführt sind, ist in dem Getriebeschema gemäß Figur 13 der erste Planetenradsatz RS1 als Plus-Planetenradsatz ausgeführt, während die anderen drei Planetenradsätze RS2, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 13 gegenüber Figur 3 unverändert, ebenso die räumliche Anordnung aller sechs Schaltelemente A bis F, sodass zur Vermeidung von Wiederholungen bei der Erläuterung der Figur 13 nur die wesentlichen Unterschiede zur Figur 3 näher erklärt werden brauchen.

Um die Kinematik des Radsatzsystems gemäß Figur 3 beizubehalten, ist in Figur 13 folgendes vorgesehen: Unverändert bildet das Sonnenrad S01 das erste Element des ersten Planetenradsatzes RS1, welches über die (als erste Koppelwelle fungierende) dritte Welle 3 des Automatgetriebes sowohl mit dem Sonnenrad S04 des vierten Planetenradsatzes RS4 als auch mit der Bremse A ständig direkt verbunden ist, also über diese Bremse A (zusammen mit dem Sonnenrad S04) an dem Gehäuse GG festsetzbar ist. Nunmehr bildet das Hohlrad H01 das zweite Element des ersten Planetenradsatzes RS1, welches als vierte Welle 4 des Automatgetriebes ständig mit der Kupplung B verbunden und über diese Kupplung B mit der sechsten Welle 6 des Automatgetriebes verbindbar ist. Das dritte Element (Hohlrad H03) des dritten Planetenradsatzes RS3 bildet diese sechste Welle 6. Nunmehr bildet der Planetenradträger ST1 das dritte Element des ersten Planetenradsatzes RS1, welches ständig an dem Gehäuse GG festgesetzt ist.

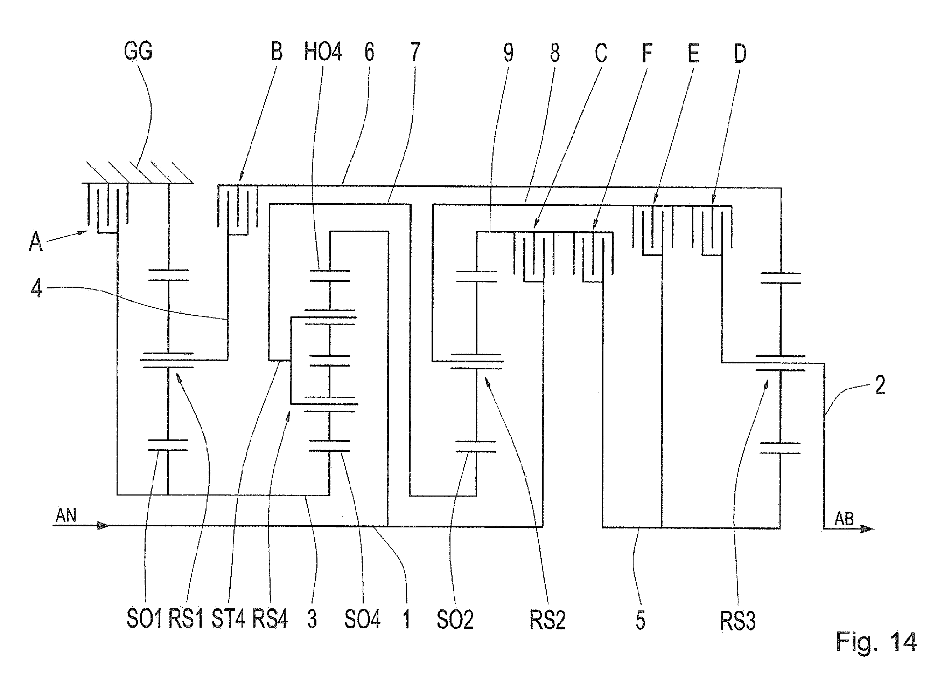

Figur 14 zeigt eine schematische Darstellung einer zweiten Alternative zu dem in Figur 3 dargestellten Getriebeschema. Im Unterschied zu dem Getriebeschema gemäß Figur 3, bei dem alle vier Planetenradsätze als Minus-Planetenradsätze ausgeführt sind, ist in dem Getriebeschema gemäß Figur 14 der vierte Planetenradsatz RS4 als Plus-Planetenradsatz ausgeführt, während die anderen drei Planetenradsätze RS1, RS2, RS3 unverändert als Minus-Planetenradsätze ausgeführt sind. Räumlich gesehen ist die Abfolge der vier einzelnen, koaxial zueinander nebeneinander angeordneten Planetenradsätze in Figur 14 gegenüber Figur 3 unverändert, ebenso die räumliche Anordnung aller sechs Schaltelemente A bis F.

Die durch die Vertauschung der Anbindung von Planetenradträger und Hohlrad des Plus-Planetenradsatzes gegenüber dem Minus-Planetenradsatz bedingten baulichen Anpassungen wurden bereits anhand von Figur 8 erläutert und bedürfen daher an dieser Stelle keiner Wiederholung, bis auf denHinweis, dass die siebte Welle 7 in dem Getriebeschema gemäß Figur 14 als zweite Koppelwelle (und nicht wie in Figur 8 als dritte Koppelwelle) fungiert.

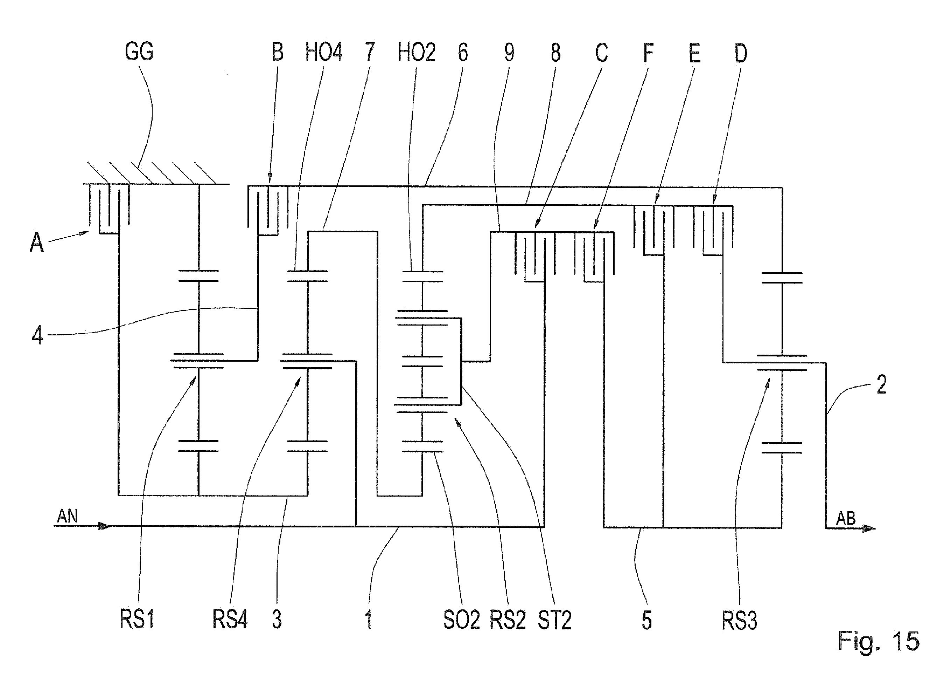

Figur 15 zeigt eine schematische Darstellung einer dritten Alternative zu dem in Figur 3 dargestellten Getriebeschema. Im Unterschied zu dem Getriebeschema gemäß Figur 3, bei dem alle vier Planetenradsätze als Minus-Planetenradsätze ausgeführt sind, ist in dem Getriebeschema gemäß Figur 15 der zweite Planetenradsatz RS2 als Plus-Planetenradsatz ausgeführt, während die anderen drei Planetenradsätze RS1, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 15 gegenüber Figur 3 unverändert, ebenso die räumliche Anordnung aller sechs Schaltelemente A bis F.

Die durch die Vertauschung der Anbindung von Planetenradträger und Hohlrad des Plus-Planetenradsatzes gegenüber dem Minus-Planetenradsatz bedingten baulichen Anpassungen wurden bereits anhand von Figur 9 erläutert und bedürfen daher an dieser Stelle keiner Wiederholung, bis auf die Hinweise, dass die sechste Welle 6 in dem Getriebeschema gemäß Figur 15 nicht als Koppelwelle fungiert, und dass die siebte Welle 7 in dem Getriebeschema gemäß Figur 15 als zweite Koppelwelle (und nicht wie in Figur 9 als dritte Koppelwelle) fungiert.

In Kenntnis dieser drei beispielhaft erläuterten Alternativen zu dem in Figur 3 dargestellten Getriebeschema wird der Fachmann problemlos auch die anderen in der Tabelle der Figur 6 aufgelisteten Alternativen mit mehreren Plus-Planetenradsätzen generieren. Zur Beibehaltung des Kinematik des Radsatzsystems muss hierbei lediglich das erste Element jedes Minus-Planetenradsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss.

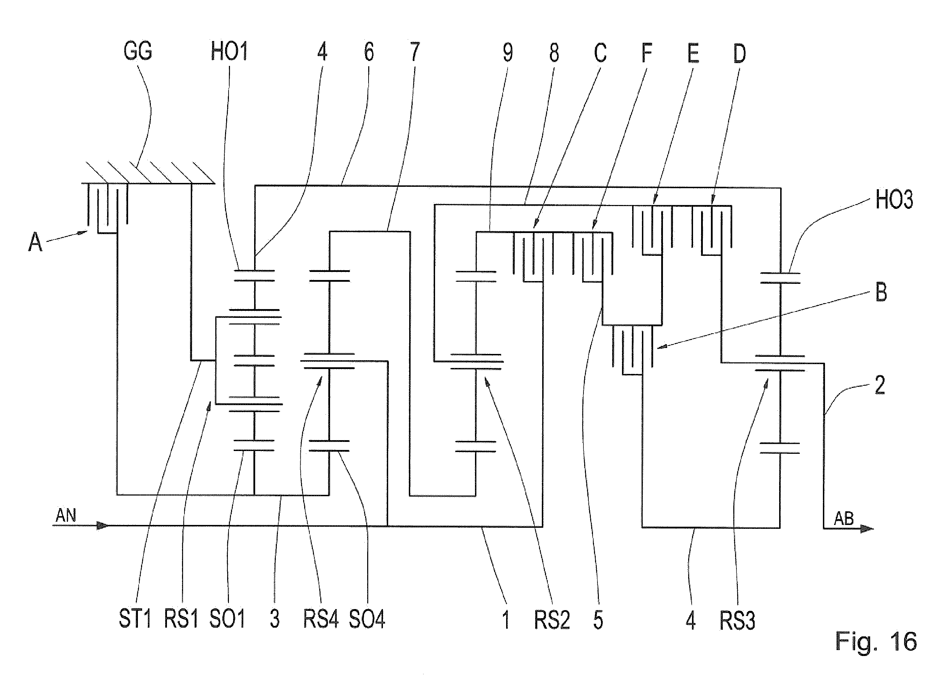

Figur 16 zeigt eine schematische Darstellung einer ersten Alternative zu dem in Figur 4 dargestellten Getriebeschema. Im Unterschied zu dem Getriebeschema gemäß Figur 4, bei dem alle vier Planetenradsätze als Minus-Planetenradsätze ausgeführt sind, ist in dem Getriebeschema gemäß Figur 16 der erste Planetenradsatz RS1 als Plus-Planetenradsatz ausgeführt, während die anderen drei Planetenradsätze RS2, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 16 gegenüber Figur 4 unverändert, ebenso die räumliche Anordnung aller sechs Schaltelemente A bis F, sodass zur Vermeidung von Wiederholungen bei der Erläuterung der Figur 16 nur die wesentlichen Unterschiede zur Figur 4 näher erklärt werden brauchen.

Um die Kinematik des Radsatzsystems gemäß Figur 4 beizubehalten, ist in Figur 16 folgendes vorgesehen: Unverändert bildet das Sonnenrad S01 das erste Element des ersten Planetenradsatzes RS1, welches über die (als erste Koppelwelle fungierende) dritte Welle 3 des Automatgetriebes sowohl mit dem Sonnenrad S04 des vierten Planetenradsatzes RS4 als auch mit der Bremse A ständig direkt verbunden ist, also über diese Bremse A (zusammen mit dem Sonnenrad S04) an dem Gehäuse GG festsetzbar ist. Nunmehr bildet das Hohlrad H01 das zweite Element des ersten Planetenradsatzes RS1, welches über die (als zweite Koppelwelle fungierende) sechste Welle 6 des Automatgetriebes ständig direkt mit dem dritten Element (Hohlrad H03) des dritten Planetenradsatzes RS3 verbunden ist. Nunmehr bildet der Planetenradträger ST1 das dritte Element des ersten Planetenradsatzes RS1, welches ständig an dem Gehäuse GG festgesetzt ist.

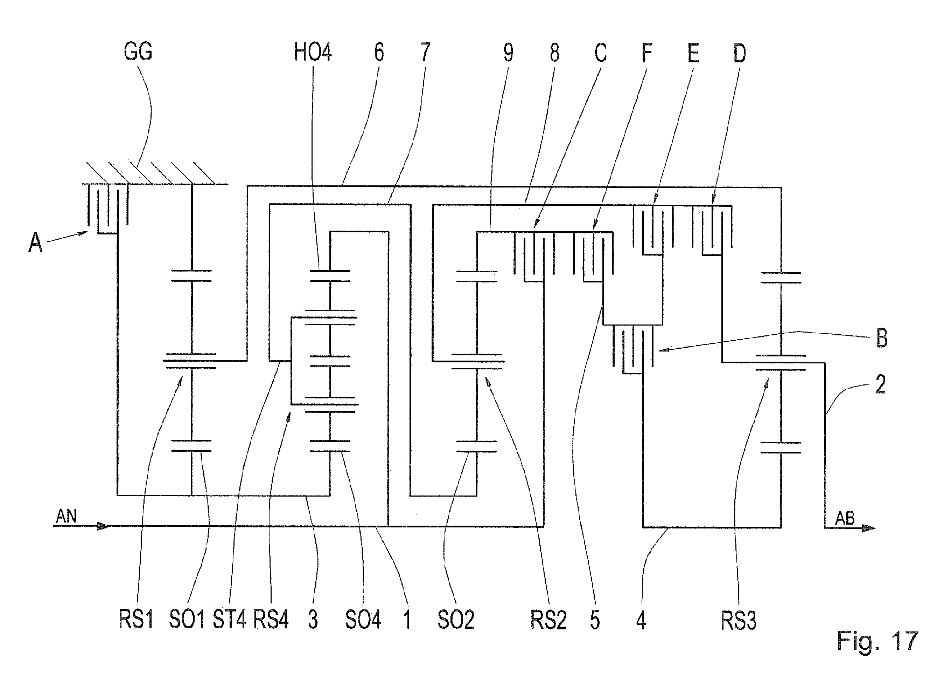

Figur 17 zeigt eine schematische Darstellung einer zweiten Alternative zu dem in Figur 4 dargestellten Getriebeschema. Im Unterschied zu dem Getriebeschema gemäß Figur 4, bei dem alle vier Planetenradsätze als Minus-Planetenradsätze ausgeführt sind, ist in dem Getriebeschema gemäß Figur 17 der vierte Planetenradsatz RS4 als Plus-Planetenradsatz ausgeführt, während die anderen drei Planetenradsätze RS1, RS2, RS3 unverändert als Minus-Planetenradsätze ausgeführt sind. Räumlich gesehen ist die Abfolge der vier einzelnen, koaxial zueinander nebeneinander angeordneten Planetenradsätze in Figur 17 gegenüber Figur 4 unverändert, ebenso die räumliche Anordnung aller sechs Schaltelemente A bis F.

Die durch die Vertauschung der Anbindung von Planetenradträger und Hohlrad des Plus-Planetenradsatzes gegenüber dem Minus-Planetenradsatz bedingten baulichen Anpassungen wurden bereits anhand von Figur 8 erläutert und bedürfen daher an dieser Stelle keiner Wiederholung.

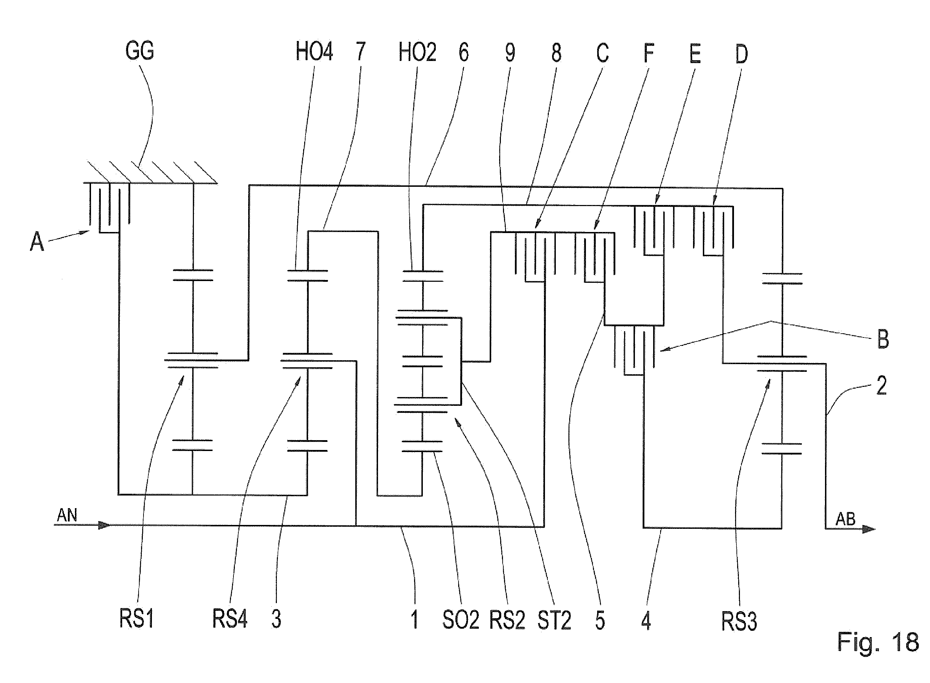

Figur 18 zeigt eine schematische Darstellung einer dritten Alternative zu dem in Figur 4 dargestellten Getriebeschema. Im Unterschied zu dem Getriebeschema gemäß Figur 4, bei dem alle vier Planetenradsätze als Minus-Planetenradsätze ausgeführt sind, ist in dem Getriebeschema gemäß Figur 18 der zweite Planetenradsatz RS2 als Plus-Planetenradsatz ausgeführt, während die anderen drei Planetenradsätze RS1, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 18 gegenüber Figur 4 unverändert, ebenso die räumliche Anordnung aller sechs Schaltelemente A bis F, sodass zur Vermeidung von Wiederholungen bei der Erläuterung der Figur 18 nur die wesentlichen Unterschiede zur Figur 4 näher erklärt werden brauchen.

Um die Kinematik des Radsatzsystems gemäß Figur 4 beizubehalten, ist in Figur 18 folgendes vorgesehen: Unverändert bildet das Sonnenrad S02 das erste Element des zweiten Planetenradsatzes RS2, welches über die (als dritte Koppelwelle fungierende) siebte Welle 7 des Automatgetriebes ständig mit dem dritten Element (Hohlrad H04) des vierten Planetenradsatzes RS4 verbunden ist. Nunmehr bildet das Hohlrad H02 das zweite Element des zweiten Plane-tenradsatzes RS2, welches als achte Welle 8 des Automatgetriebes ständig mit den beiden Kupplungen D und E verbunden ist. Nunmehr bildet der Planetenradträger ST2 das dritte Element des zweiten Planetenradsatzes RS2, welches als neunte Welle 9 des Automatgetriebes ständig mit den beiden Kupplungen C und F verbunden ist. Soll der zweite Planetenradsatzes RS2 verblockt werden, sodass alle drei Elemente des Planetenradsatzes RS2 mit gleicher Drehzahl rotieren, müssen die in Kraftflussrichtung in Reihe hintereinander angeordneten Kupplungen E und F gleichzeitig geschlossen werden, wodurch dann nunmehr Hohlrad H02 und Planetenradträger ST2 des zweiten Planetenradsatzes RS2 miteinander verbunden werden.

In Kenntnis dieser drei beispielhaft erläuterten Alternativen zu dem in Figur 4 dargestellten Getriebeschema wird der Fachmann problemlos auch die anderen in der Tabelle der Figur 6 aufgelisteten Alternativen mit mehreren Plus-Planetenradsätzen generieren. Zur Beibehaltung des Kinematik des Radsatzsystems muss hierbei lediglich das erste Element jedes Minus-Planeten-radsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss.

Wie auch die in den Figuren 1 bis 4 dargestellten Automatgetriebe können auch alle in den Figuren 7 bis 18 dargestellten Automatgetriebe unter Verwendung der in Figur 5 angegebenen Schaltlogik zehn Vorwärtsgänge und einen Rückwärtsgang schalten.

Nachfolgend werden Weiterentwicklungen erläutert, die aufbauend auf den zuvor erläuterten erfindungsgemäßen 10-Gang-Automatgetrieben nunmehr elf Vorwärtsgänge aufweisen.

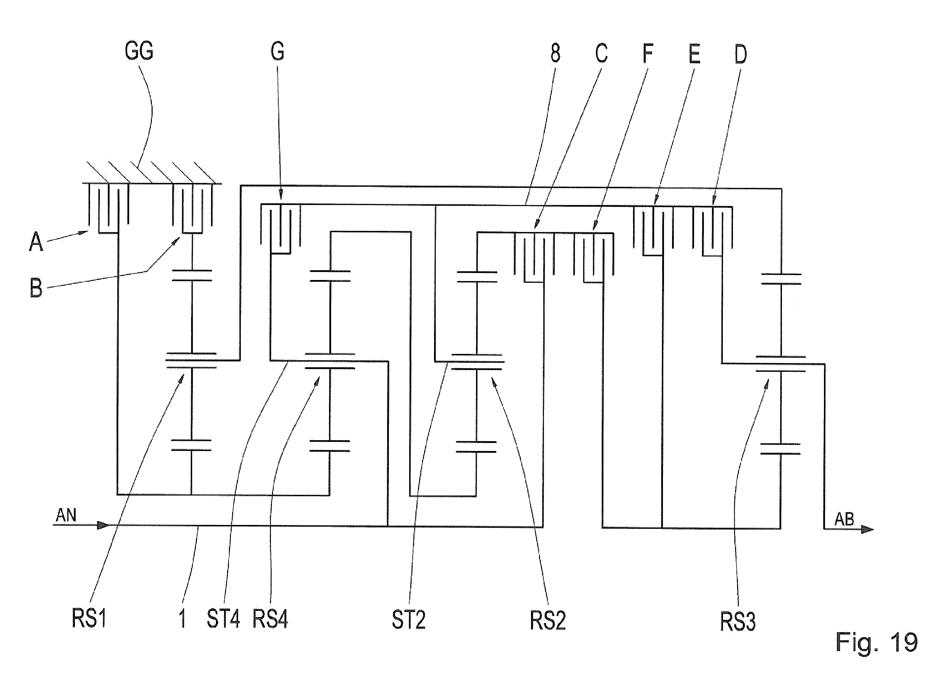

In Figur 19 ist das Radsatzschema eines ersten Ausführungsbeispiels eines erfindungsgemäßen 11-Gang-Automatgetriebes dargestellt. Das hier dargestellte Radsatzschema ist eine Weiterentwicklung des in Figur 1 dargestellten 10-Gang-Automatgetriebes. Mit dem Ziel eines weiteren Vorwärtsgangs, ohne die in Figur 1 angegebene Getriebestruktur signifikant verändern und die erforderliche Baulänge des Getriebes signifikant vergrößern zu müssen, ist ausgehend von dem in Figur 1 dargestellten Getriebeschema bei dem Getriebe gemäß Figur 19 ein zusätzliches siebtes Schaltelement G vorgesehen, das als Kupplung ausgebildet und im Kraftfluss zwischen der ersten Welle 1 (Antriebswelle AN) und der achten Welle 8 des Automatgetriebes angeordnet ist. Hierdurch wird ein zusätzlicher Vorwärtsgang unterhalb des aus Figur 5 bekannten ersten Gangs des 10-Gang-Getriebes erzielt, also ein zusätzlicher Anfahrgang mit einer Übersetzung größer der Übersetzung des aus Figur 5 bekannten ersten Gangs.

Wie in Figur 1 sind bei dem in Figur 19 dargestellten Ausführungsbeispiel alle vier Planetenradsätze RS1, RS2, RS3, RS4 als einfache Minus-Planetenradsätze ausgebildet, von denen jeder ein erstes, ein zweites und ein drittes Element aufweist, also jeder ein Sonnenrad, einen Planetenradträger und ein Hohlrad. Dabei sind die ersten Elemente alle als Sonnenräder ausgebildet, die zweiten Elemente alle als Planetenradträger und die dritten Elemente alle als Hohlräder. Die räumliche Anordnung der vier Planetenradsätze RS1, RS2, RS3, RS4 koaxial nebeneinander mit der definierten Reihenfolge "erster, vierter, zweiter, dritter Planetenradsatz" (also Anordnung "RS1-RS4-RS2-RS3") ist aus Figur 1 unverändert übernommen. Aus Figur 1 ebenfalls übernommen ist die räumliche Anordnung der sechs Schaltelemente A bis F.

Wie aus Figur 19 weiterhin ersichtlich, ist die im Kraftfluss zwischen Welle 1 (Antriebswelle AN) und Welle 8 angeordnete Kupplung G räumlich gesehen in einem Bereich axial zwischen dem ersten Planetenradsatz RS1 und dem vierten Planetenradsatz RS4 angeordnet. Dies erlaubt die Anordnung des Lamellenpaketes der Kupplung G, die - wie später noch erläutert werden wird, nur im ersten Vorwärtsgang geschlossen ist und dann ein vergleichsweise großes Drehmoment übertragen muss - auf einem vergleichsweise großem Durchmesser, ähnlich dem Durchmesser der beiden Hohlräder H01 und H04. Entsprechend übergreift der hier beispielhaft mit dem Außenlamellenträger der Kupplung G verbundene Abschnitt der achten Welle 8 den vierten Planetenradsatz RS4 vollständig, wodurch der Planetenradsatz RS4 und die Kupplung G innerhalb eines Zylinderraums angeordnet sind, der durch diesen Abschnitt der Welle 8 gebildet wird. Die Druck- und Schmiermittelzufuhr zur Kupplung G ist in konstruktiv einfach Weise leckageverlustarm über die Antriebswelle AN und den ständig mit der Antriebswelle AN verbundenen Planetenradträger ST4 des vierten Planetenradsatzes RS4 realisierbar.

Die hier dargestellte räumliche Anordnung der Kupplung G hat beispielhaften Charakter; selbstverständlich kann der Fachmann die Kupplung G auch anderweitig räumlich platzieren. Beispielsweise kann die Kupplung G räumlich gesehen auch in einem Bereich axial zwischen dem zweiten Planetenradsatz RS2 und dem vierten Planetenradsatz RS4 angeordnet sein. Wenn die Kupplung G abweichend zu Figur 19 in Bauart einer Klauenkupplung ausgeführt ist, bietet es sich an, diese Klauenkupplung auf kleinem Durchmesser im Bereich axial zwischen den Sonnenrädern S02 und S04 anzuordnen.

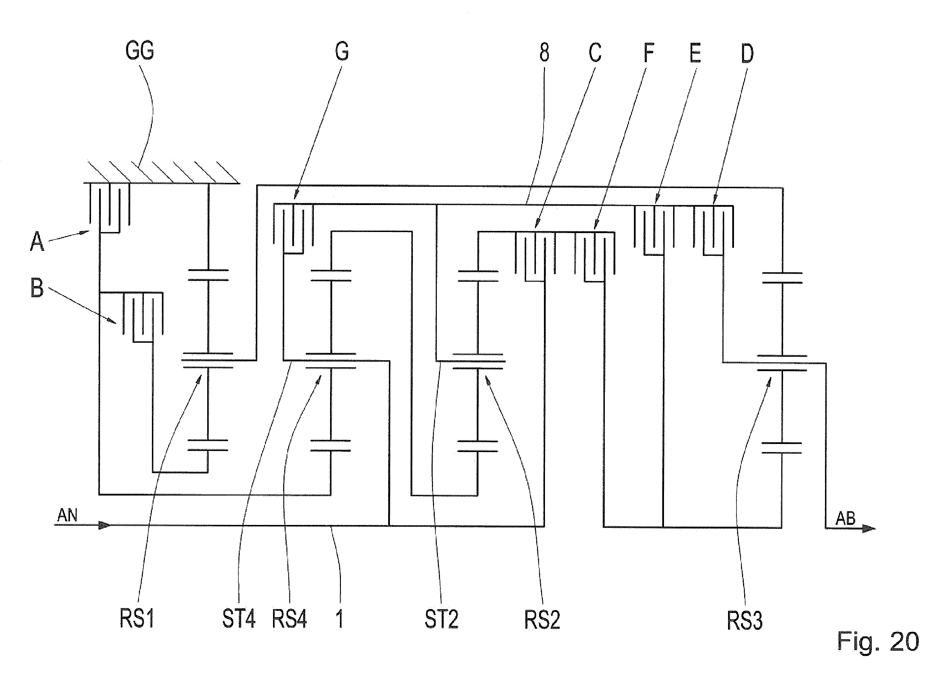

Diese anhand Figur 19 beschriebene Erweiterung des Getriebeschemas gemäß Figur 1 um ein zusätzliches siebtes Schaltelement G ist auch auf die Getriebekinematik gemäß Figur 2, die Getriebekinematik gemäß Figur 3 und die Getriebekinematik gemäß Figur 4 übertragbar, was nachfolgend anhand der Figuren 20 bis 22 gezeigt wird. Die anhand Figur 19 erläuterten Überlegungen zur räumlichen Anordnung der zusätzlichen Kupplung G sind auch die in den Figuren 20 bis 22 dargestellten Getriebe anwendbar.

In Figur 20 ist das Radsatzschema eines zweiten Ausführungsbeispiels eines erfindungsgemäßen 11-Gang-Automatgetriebes dargestellt. Das hier dargestellte Radsatzschema ist eine Weiterentwicklung des in Figur 2 dargestellten 10-Gang-Automatgetriebes. Wie in Figur 19 ist ein zusätzliches siebtes Schaltelement G vorgesehen, das als Kupplung ausgebildet und im Kraftfluss zwischen der ersten Welle 1 (Antriebswelle AN) und der achten Welle 8 des Automatgetriebes angeordnet ist.

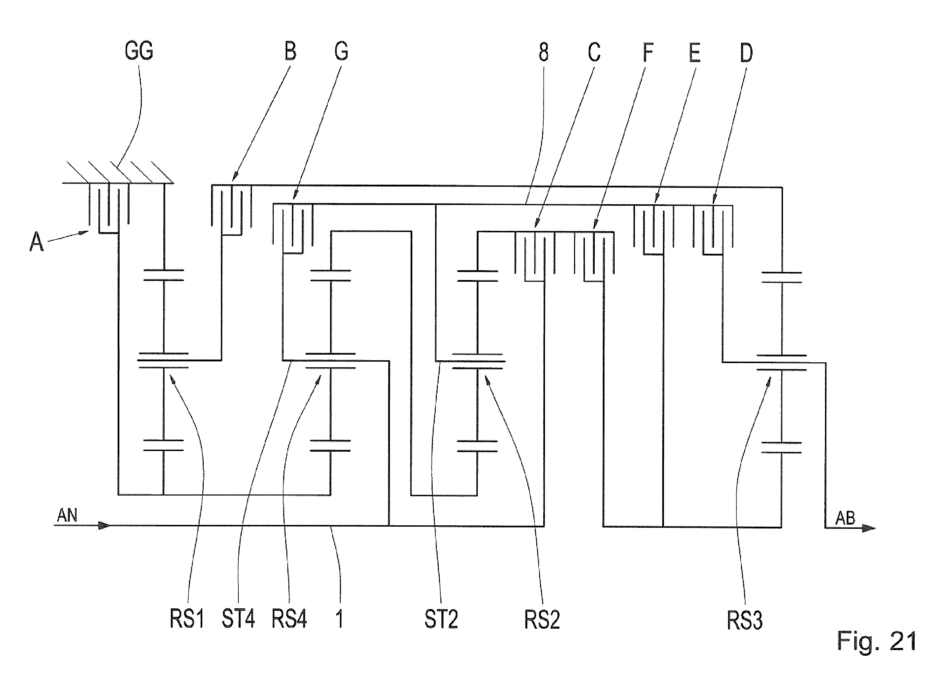

In Figur 21 ist das Radsatzschema eines dritten Ausführungsbeispiels eines erfindungsgemäßen 11-Gang-Automatgetriebes dargestellt. Das hier dargestellte Radsatzschema ist eine Weiterentwicklung des in Figur 3 dargestellten 10-Gang-Automatgetriebes. Wie in Figur 19 ist ein zusätzliches siebtes Schaltelement G vorgesehen, das als Kupplung ausgebildet und im Kraftfluss zwischen der ersten Welle 1 (Antriebswelle AN) und der achten Welle 8 des Automatgetriebes angeordnet ist.

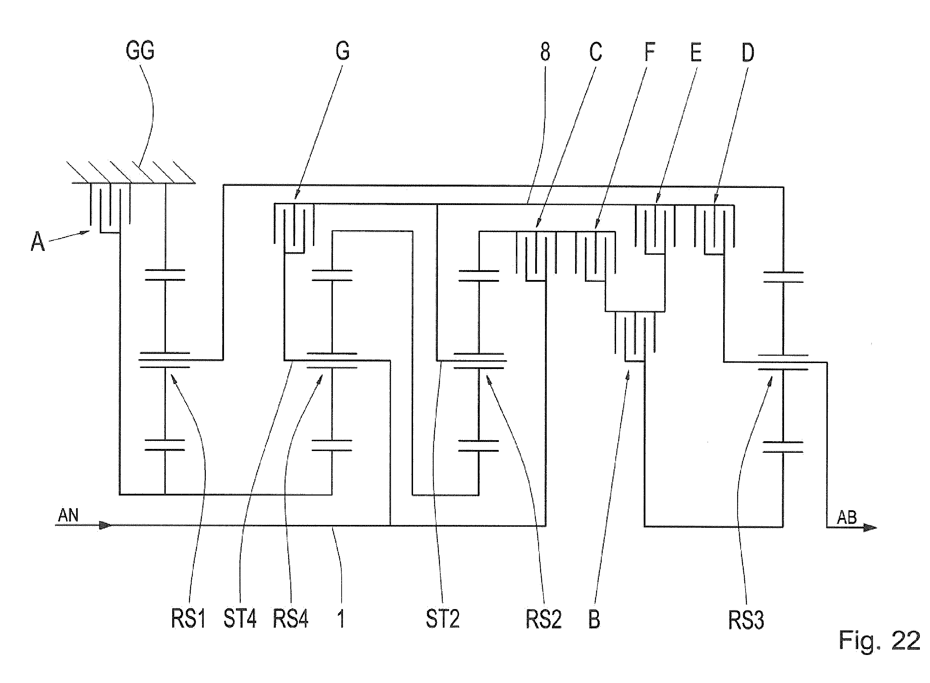

In Figur 22 ist das Radsatzschema eines dritten Ausführungsbeispiels eines erfindungsgemäßen 10-Gang-Automatgetriebes dargestellt. Das hier dargestellte Radsatzschema ist eine Weiterentwicklung des in Figur 3 dargestellten 9-Gang-Automatgetriebes. Wie in Figur 19 ist ein zusätzliches siebtes Schaltelement G vorgesehen, das als Kupplung ausgebildet und im Kraftfluss zwischen der ersten Welle 1 (Antriebswelle AN) und der achten Welle 8 des Automatgetriebes angeordnet ist.

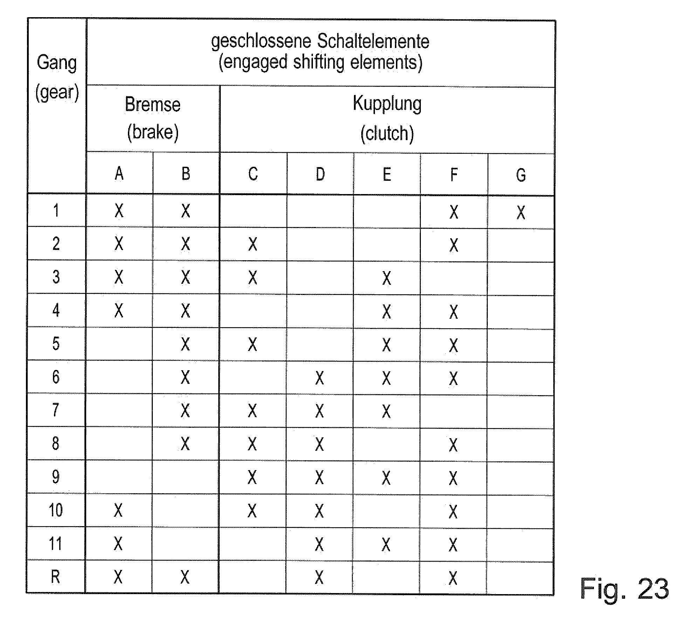

In Figur 23 ist ein beispielhaftes Schaltschema des erfindungsgemäßen 11-Gang-Automatgetriebes gemäß der Figuren 19 bis 22 dargestellt. In jedem Gang sind vier Schaltelemente geschlossen und drei Schaltelemente offen. Des Weiteren kann dem Schaltschema entnommen werden, dass bei sequentieller Schaltweise Doppelschaltungen bzw. Gruppenschaltungen vermieden werden, da zwei in der Schaltlogik benachbarte Gangstufen stets zwei Schaltelemente gemeinsam benutzen. Der erste Vorwärtsgang eignet sich gut als ein so genannter Crawler mit kleiner Gesamtübersetzung für eine große Zugkraft. Der neunte Vorwärtsgang ist als direkter Gang ausgebildet, sodass zwei Vorwärtsgänge mit Overdrive-Charakter zur Verfügung sehen.

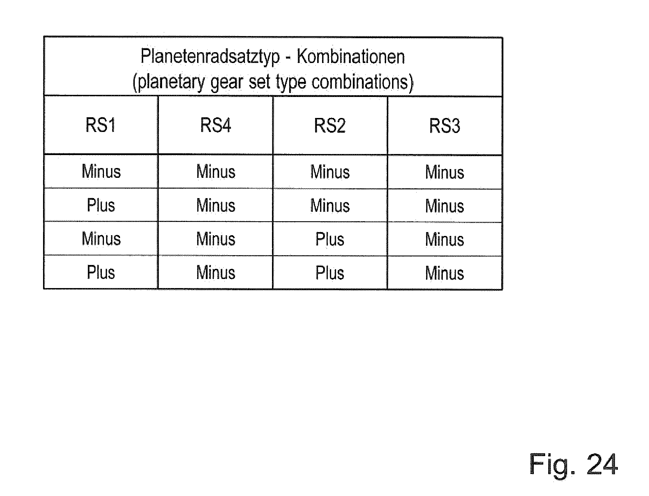

Die in den Figuren 19 bis 22 dargestellten Ausführungen, bei denen alle vier Planetenradsätze RS1, RS2, RS3, RS4 als einfache Minus-Planetenradsätze ausgebildet sin, sind als beispielhaft zu verstehen. Ohne die Kinematik des Radsatzsystems zu verändern, können einzelne oder mehrere der Minus-Planetenradsätze durch Plus-Planetenradsätze substituiert werden. Figur 24 zeigt eine Tabelle mit derartigen Planetenradsatztyp-Variationen, die zu einem technisch sinnvollen Getriebeaufbau führen. Im Folgenden werden zwei dieser Beispiele näher erläutert. Alle in der Tabelle aufgelisteten Varianten können über die in Figur 23 dargestellte Schaltlogik elf Vorwärtsgänge und einen Rückwärtsgang schalten.

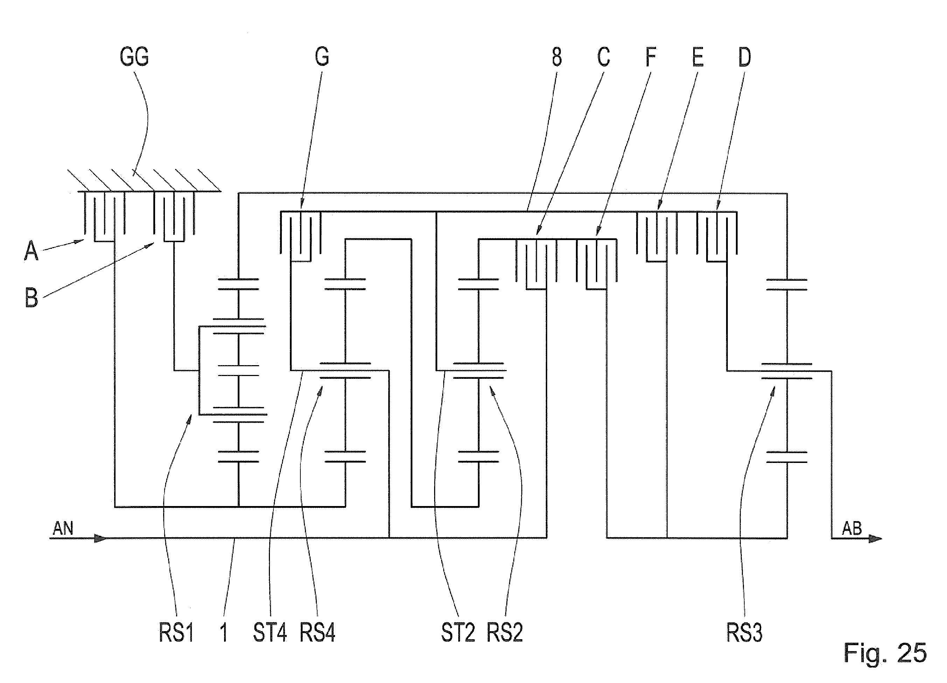

Figur 25 zeigt eine schematische Darstellung einer ersten Alternative zu dem in Figur 19 dargestellten Getriebeschema. Im Unterschied zu dem Getriebeschema gemäß Figur 19, bei dem alle vier Planetenradsätze als Minus-Planetenradsätze ausgeführt sind, ist in dem Getriebeschema gemäß Figur 19 der erste Planetenradsatz RS1 als Plus-Planetenradsatz ausgeführt, während die anderen drei Planetenradsätze RS2, RS3 und RS4 unverändert als Minus-Planetenradsätze ausgeführt sind. Räumlich gesehen ist die Abfolge der vier einzelnen, koaxial zueinander nebeneinander angeordneten Planetenradsätze in Figur 25 gegenüber Figur 19 unverändert, ebenso die räumliche Anordnung der sieben Schaltelemente A bis G. In diesem Zusammenhang soll auch auf das in Figur 7 dargestellte 10-Gang-Automatgetriebe verwiesen werden, bei dem der erste Planetenradsatz RS1 als Plus-Planetenradsatz ausgebildet ist, während die anderen drei Planetenradsätze RS2, RS3 und RS4 als Minus-Planetenradsätze ausgebildet sind. Es ist leicht ersichtlich, dass das in Figur 25 dargestellte 11-Gang-Automatgetriebe von dem Getriebe gemäß Figur 7 nur durch das zusätzliche siebtes Schaltelement G unterscheidet, welches - wie in Figur 25 - im Kraftfluss zwischen der ersten Welle 1 (Antriebswelle AN) und der achten Welle 8 des Automatgetriebes angeordnet ist. Somit bedarf es keiner weiteren detaillierten Erklärung der Figur 25.

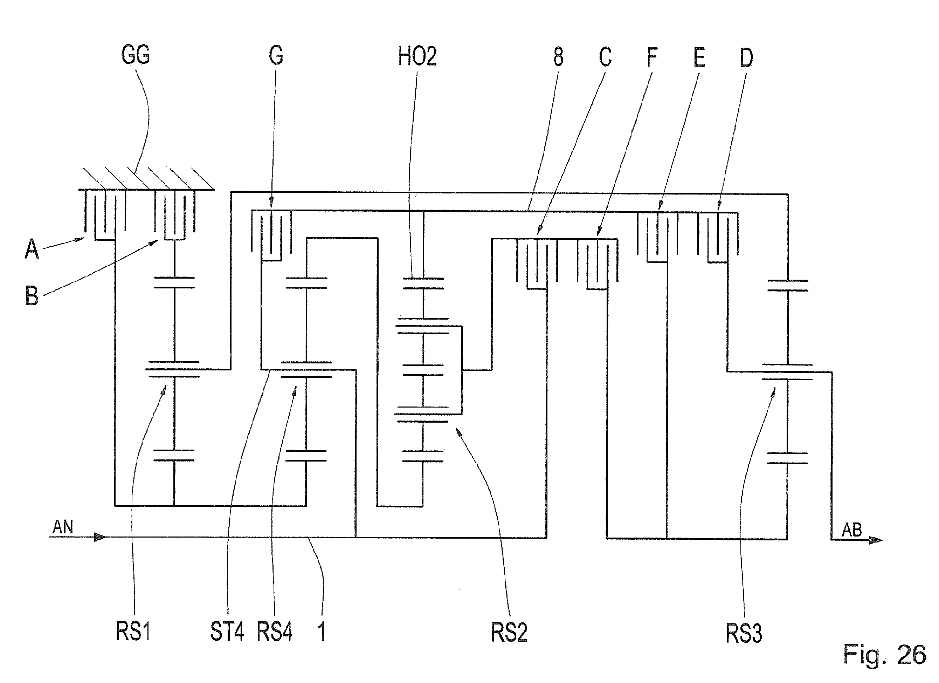

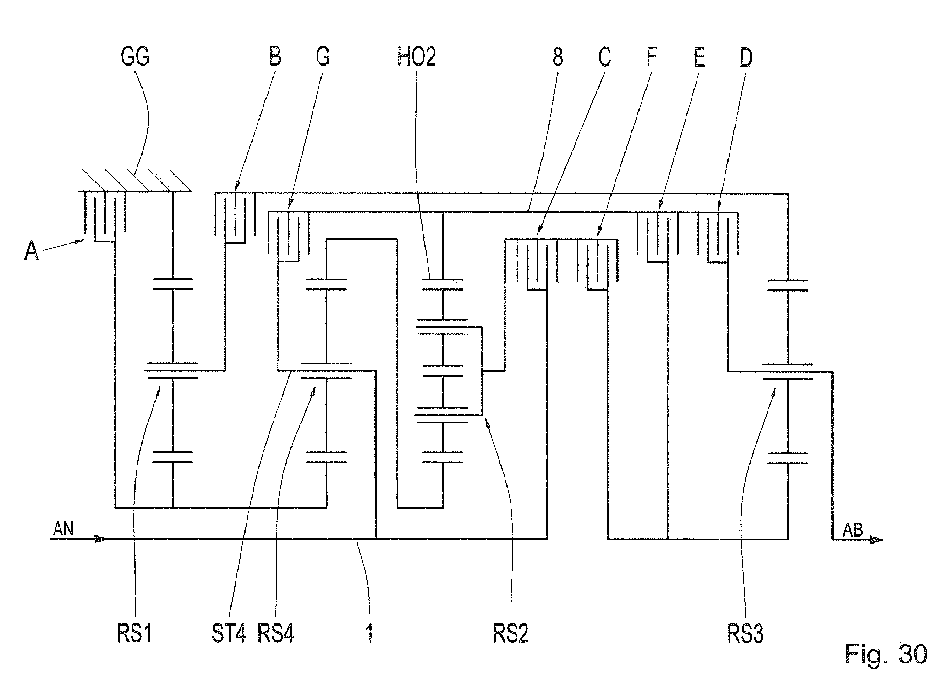

Figur 26 zeigt eine schematische Darstellung einer zweiten Alternative zu dem in Figur 19 dargestellten Getriebeschema. Im Unterschied zu dem Getriebeschema gemäß Figur 19, bei dem alle vier Planetenradsätze als Minus-Planetenradsätze ausgeführt sind, ist in dem Getriebeschema gemäß Figur 26 der zweite Planetenradsatz RS2 als Plus-Planetenradsatz ausgeführt, während die anderen drei Planetenradsätze RS1, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 26 gegenüber Figur 19 unverändert, ebenso die räumliche Anordnung der sieben Schaltelemente A bis G. In diesem Zusammenhang soll auch auf das in Figur 9 dargestellte 10-Gang-Automatgetriebe verwiesen werden, bei dem der erste Planetenradsatz RS1 als Plus-Planetenradsatz ausgebildet ist, während die anderen drei Planetenradsätze RS2, RS3 und RS4 als Minus-Planetenradsätze ausgebildet sind. Es ist leicht ersichtlich, dass das in Figur 26 dargestellte 11-Gang-Automatgetriebe von dem Getriebe gemäß Figur 9 nur durch das zusätzliche siebtes Schaltelement G unterscheidet, welches - wie in Figur 19 - im Kraftfluss zwischen der ersten Welle 1 (Antriebswelle AN) und der achten Welle 8 des Automatgetriebes angeordnet ist. Somit bedarf es keiner weiteren detaillierten Erklärung der Figur 30.

In Kenntnis dieser beiden beispielhaft erläuterten Alternativen zu dem in Figur 19 dargestellten Getriebeschema wird der Fachmann problemlos auch die anderen in der Tabelle der Figur 24 aufgelisteten Alternativen mit mehreren Plus-Planetenradsätzen generieren. Zur Beibehaltung des Kinematik des Radsatzsystems muss hierbei lediglich das erste Element jedes Minus-Planetenradsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss.

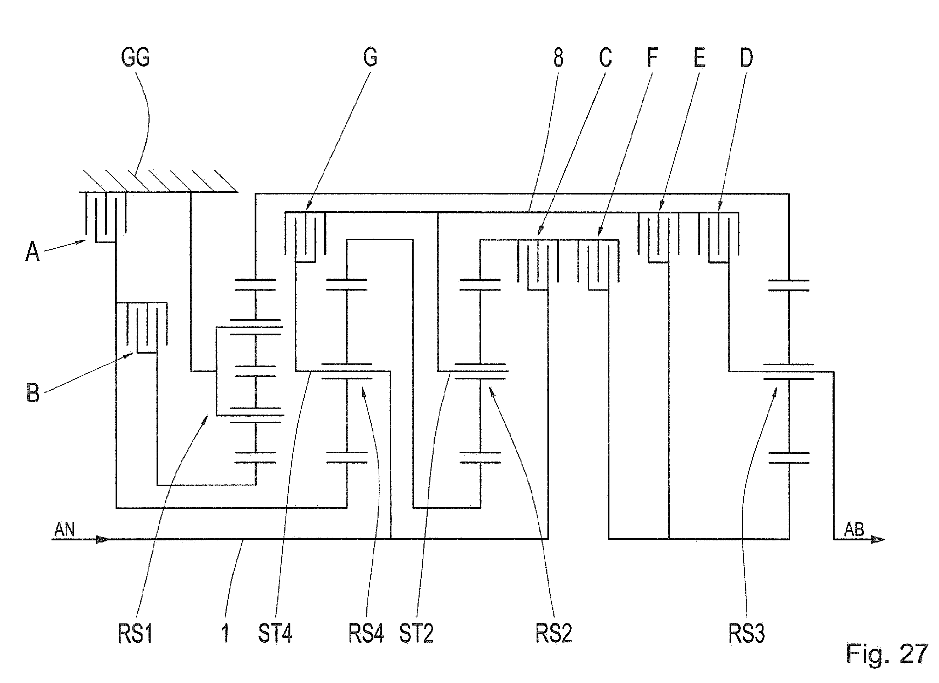

Figur 27 zeigt eine schematische Darstellung einer ersten Alternative zu dem in Figur 20 dargestellten Getriebeschema. Im Unterschied zu dem Getriebeschema gemäß Figur 20, bei dem alle vier Planetenradsätze als Minus-Planetenradsätze ausgeführt sind, ist in dem Getriebeschema gemäß Figur 27 der erste Planetenradsatz RS1 als Plus-Planetenradsatz ausgeführt, während die anderen drei Planetenradsätze RS2, RS3 und RS4 unverändert als Minus-Planetenradsätze ausgeführt sind. Räumlich gesehen ist die Abfolge der vier einzelnen, koaxial zueinander nebeneinander angeordneten Planetenradsätze in Figur 27 gegenüber Figur 20 unverändert, ebenso die räumliche Anordnung der sieben Schaltelemente A bis G. In diesem Zusammenhang soll auch auf das in Figur 10 dargestellte 10-Gang-Automatgetriebe verwiesen werden, bei dem der erste Planetenradsatz RS1 als Plus-Planetenradsatz ausgebildet ist, während die anderen drei Planetenradsätze RS2, RS3 und RS4 als Minus-Planetenradsätze ausgebildet sind. Es ist leicht ersichtlich, dass das in Figur 27 dargestellte 11-Gang-Automatgetriebe von dem Getriebe gemäß Figur 10 nur durch das zusätzliche siebtes Schaltelement G unterscheidet, welches - wie in Figur 20 - im Kraftfluss zwischen der ersten Welle 1 (Antriebswelle AN) und der achten Welle 8 des Automatgetriebes angeordnet ist. Somit bedarf es keiner weiteren detaillierten Erklärung der Figur 27.

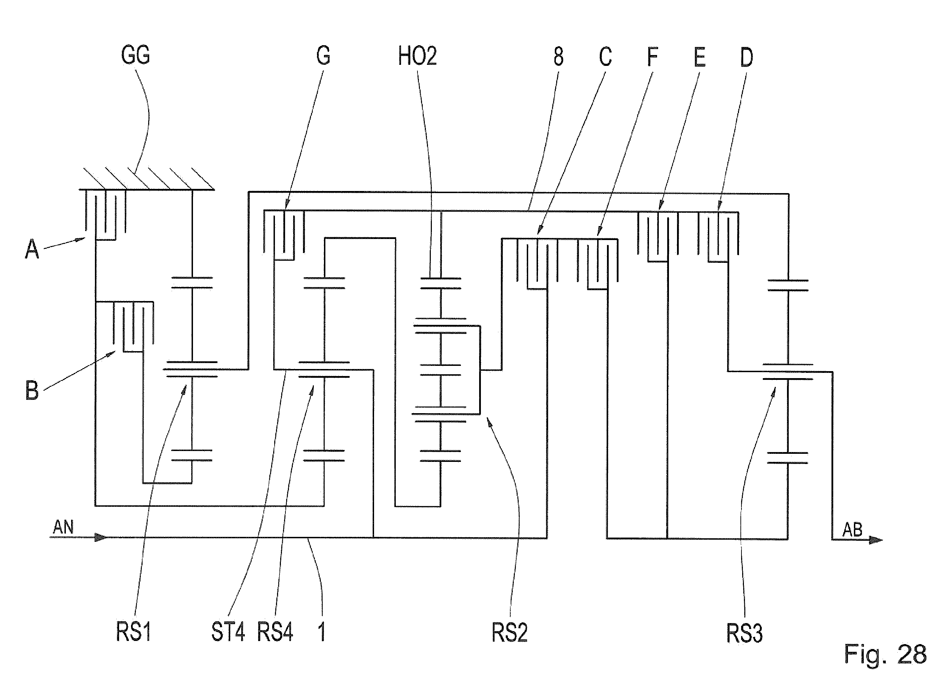

Figur 28 zeigt eine schematische Darstellung einer zweiten Alternative zu dem in Figur 20 dargestellten Getriebeschema. Im Unterschied zu dem Getriebeschema gemäß Figur 20 bei dem alle vier Planetenradsätze als Minus-Planetenradsätze ausgeführt sind, ist in dem Getriebeschema gemäß Figur 28 der zweite Planetenradsatz RS2 als Plus-Planetenradsatz ausgeführt, während die anderen drei Planetenradsätze RS1, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 28 gegenüber Figur 20 unverändert, ebenso die räumliche Anordnung der sieben Schaltelemente A bis G. In diesem Zusammenhang soll auch auf das in Figur 12 dargestellte 10-Gang-Automatgetriebe verwiesen werden, bei dem der erste Planetenradsatz RS1 als Plus-Planetenradsatz ausgebildet ist, während die anderen drei Planetenradsätze RS2, RS3 und RS4 als Minus-Planetenradsätze ausgebildet sind. Es ist leicht ersichtlich, dass das in Figur 28 dargestellte 11-Gang-Automatgetriebe von dem Getriebe gemäß Figur 16 nur durch das zusätzliche siebtes Schaltelement G unterscheidet, welches - wie in Figur 20 - im Kraftfluss zwischen der ersten Welle 1 (Antriebswelle AN) und der achten Welle 8 des Automatgetriebes angeordnet ist. Somit bedarf es keiner weiteren detaillierten Erklärung der Figur 28.

In Kenntnis dieser beiden beispielhaft erläuterten Alternativen zu dem in Figur 20 dargestellten Getriebeschema wird der Fachmann problemlos auch die anderen in der Tabelle der Figur 24 aufgelisteten Alternativen mit mehreren Plus-Planetenradsätzen generieren. Zur Beibehaltung des Kinematik des Radsatzsystems muss hierbei lediglich das erste Element jedes Minus-Planetenradsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss.

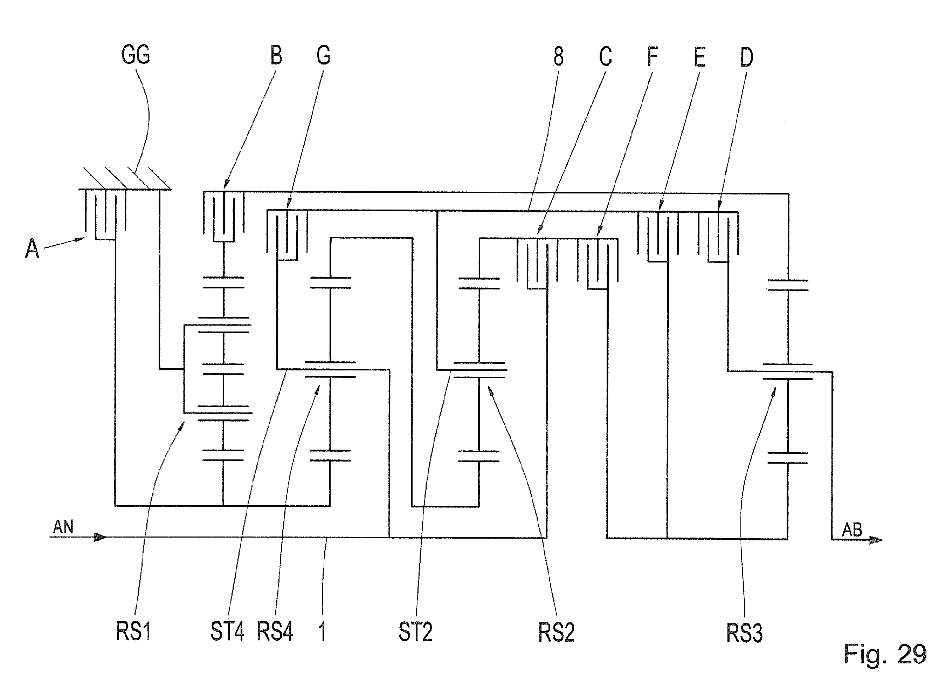

Figur 29 zeigt eine schematische Darstellung einer ersten Alternative zu dem in Figur 21 dargestellten Getriebeschema. Im Unterschied zu dem Getriebeschema gemäß Figur 21, bei dem alle vier Planetenradsätze als Minus-Planetenradsätze ausgeführt sind, ist in dem Getriebeschema gemäß Figur 29 der erste Planetenradsatz RS1 als Plus-Planetenradsatz ausgeführt, während die anderen drei Planetenradsätze RS2, RS3 und RS4 unverändert als Minus-Planetenradsätze ausgeführt sind. Räumlich gesehen ist die Abfolge der vier einzelnen, koaxial zueinander nebeneinander angeordneten Planetenradsätze in Figur 29 gegenüber Figur 21 unverändert, ebenso die räumliche Anordnung der sieben Schaltelemente A bis G. In diesem Zusammenhang soll auch auf das in Figur 13 dargestellte 10-Gang-Automatgetriebe verwiesen werden, bei dem der erste Planetenradsatz RS1 als Plus-Planetenradsatz ausgebildet ist, während die anderen drei Planetenradsätze RS2, RS3 und RS4 als Minus-Planetenradsätze ausgebildet sind. Es ist leicht ersichtlich, dass das in Figur 29 dargestellte 11-Gang-Automatgetriebe von dem Getriebe gemäß Figur 13 nur durch das zusätzliche siebtes Schaltelement G unterscheidet, welches - wie in Figur 21 - im Kraftfluss zwischen der ersten Welle 1 (Antriebswelle AN) und der achten Welle 8 des Automatgetriebes angeordnet ist. Somit bedarf es keiner weiteren detaillierten Erklärung der Figur 29.

Figur 30 zeigt eine schematische Darstellung einer zweiten Alternative zu dem in Figur 21 dargestellten Getriebeschema. Im Unterschied zu dem Getriebeschema gemäß Figur 21 bei dem alle vier Planetenradsätze als Minus-Planetenradsätze ausgeführt sind, ist in dem Getriebeschema gemäß Figur 30 der zweite Planetenradsatz RS2 als Plus-Planetenradsatz ausgeführt, während die anderen drei Planetenradsätze RS1, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 30 gegenüber Figur 21 unverändert, ebenso die räumliche Anordnung der sieben Schaltelemente A bis G. In diesem Zusammenhang soll auch auf das in Figur 15 dargestellte 10-Gang-Automatgetriebe verwiesen werden, bei dem der erste Planetenradsatz RS1 als Plus-Planetenradsatz ausgebildet ist, während die anderen drei Planetenradsätze RS2, RS3 und RS4 als Minus-Planetenradsätze ausgebildet sind. Es ist leicht ersichtlich, dass das in Figur 30 dargestellte 11-Gang-Automatgetriebe von dem Getriebe gemäß Figur 15 nur durch das zusätzliche siebtes Schaltelement G unterscheidet, welches - wie in Figur 21 - im Kraftfluss zwischen der ersten Welle 1 (Antriebswelle AN) und der achten Welle 8 des Automatgetriebes angeordnet ist. Somit bedarf es keiner weiteren detaillierten Erklärung der Figur 30.

In Kenntnis dieser beiden beispielhaft erläuterten Alternativen zu dem in Figur 21 dargestellten Getriebeschema wird der Fachmann problemlos auch die anderen in der Tabelle der Figur 24 aufgelisteten Alternativen mit mehreren Plus-Planetenradsätzen generieren. Zur Beibehaltung des Kinematik des Radsatzsystems muss hierbei lediglich das erste Element jedes Minus-Planetenradsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss.

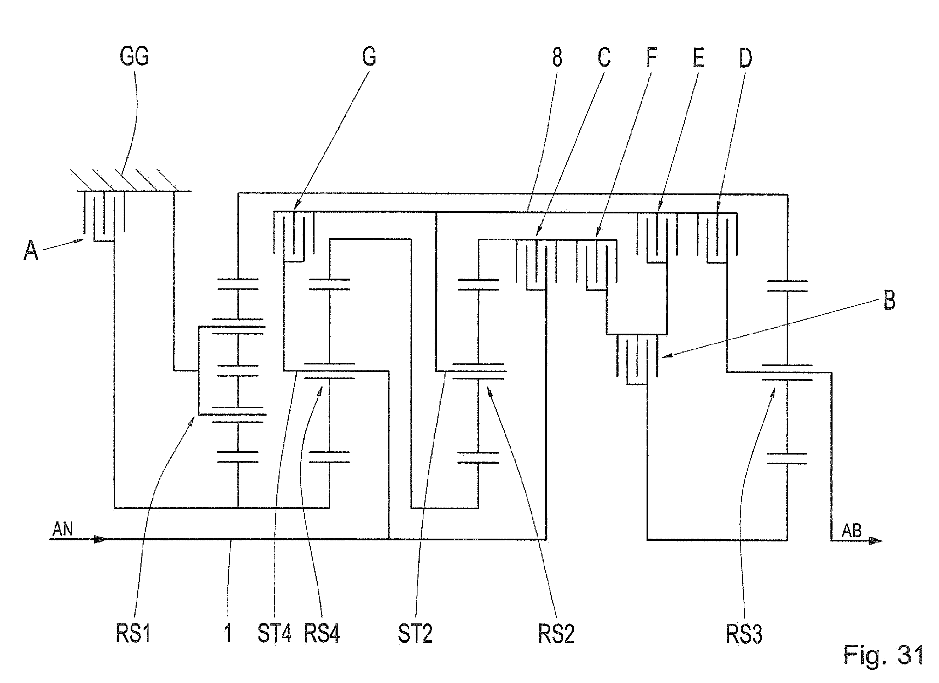

Figur 31 zeigt eine schematische Darstellung einer ersten Alternative zu dem in Figur 22 dargestellten Getriebeschema. Im Unterschied zu dem Getriebeschema gemäß Figur 22, bei dem alle vier Planetenradsätze als Minus-Planetenradsätze ausgeführt sind, ist in dem Getriebeschema gemäß Figur 31 der erste Planetenradsatz RS1 als Plus-Planetenradsatz ausgeführt, während die anderen drei Planetenradsätze RS2, RS3 und RS4 unverändert als Minus-Planetenradsätze ausgeführt sind. Räumlich gesehen ist die Abfolge der vier einzelnen, koaxial zueinander nebeneinander angeordneten Planetenradsätze in Figur 31 gegenüber Figur 22 unverändert, ebenso die räumliche Anordnung der sieben Schaltelemente A bis G. In diesem Zusammenhang soll auch auf das in Figur 16 dargestellte 10-Gang-Automatgetriebe verwiesen werden, bei dem der erste Planetenradsatz RS1 als Plus-Planetenradsatz ausgebildet ist, während die anderen drei Planetenradsätze RS2, RS3 und RS4 als Minus-Planetenradsätze ausgebildet sind. Es ist leicht ersichtlich, dass das in Figur 31 dargestellte 11-Gang-Automatgetriebe von dem Getriebe gemäß Figur 16 nur durch das zusätzliche siebtes Schaltelement G unterscheidet, welches - wie in Figur 22 - im Kraftfluss zwischen der ersten Welle 1 (Antriebswelle AN) und der achten Welle 8 des Automatgetriebes angeordnet ist. Somit bedarf es keiner weiteren detaillierten Erklärung der Figur 31.

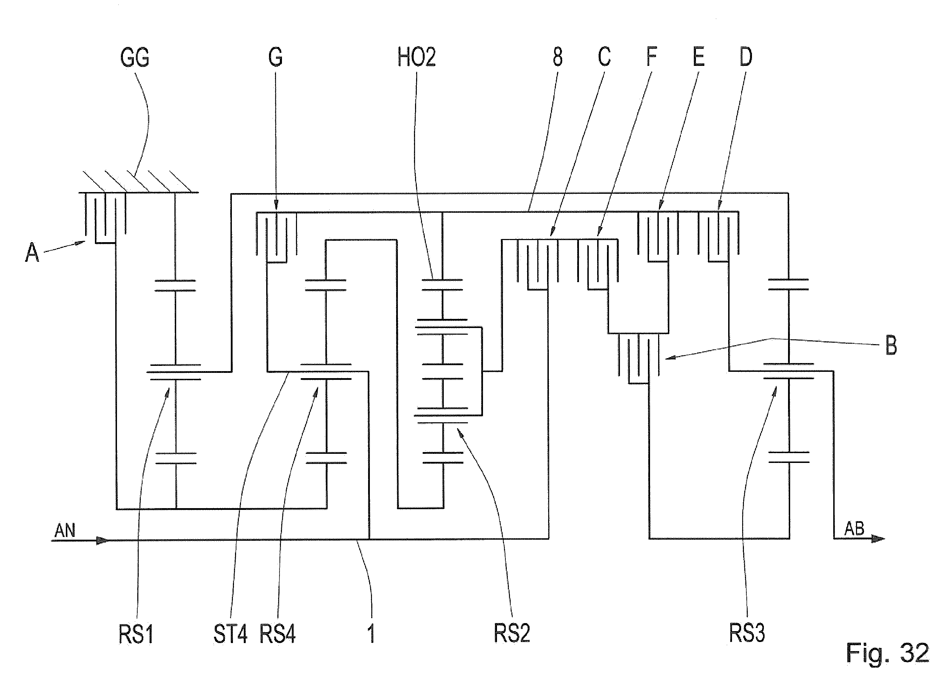

Figur 32 zeigt eine schematische Darstellung einer zweiten Alternative zu dem in Figur 22 dargestellten Getriebeschema. Im Unterschied zu dem Getriebeschema gemäß Figur 22 bei dem alle vier Planetenradsätze als Minus-Planetenradsätze ausgeführt sind, ist in dem Getriebeschema gemäß Figur 32 der zweite Planetenradsatz RS2 als Plus-Planetenradsatz ausgeführt, während die anderen drei Planetenradsätze RS1, RS3, RS4 unverändert als Minus-Planetenradsätze ausgeführt sind. Räumlich gesehen ist die Abfolge der vier einzelnen, koaxial zueinander nebeneinander angeordneten Planetenradsätze in Figur 32 gegenüber Figur 22 unverändert, ebenso die räumliche Anordnung der sieben Schaltelemente A bis G. In diesem Zusammenhang soll auch auf das in Figur 18 dargestellte 10-Gang-Automatgetriebe verwiesen werden, bei dem der erste Planetenradsatz RS1 als Plus-Planetenradsatz ausgebildet ist, während die anderen drei Planetenradsätze RS2, RS3 und RS4 als Minus-Planetenradsätze ausgebildet sind. Es ist leicht ersichtlich, dass das in Figur 32 dargestellte 11-Gang-Automatgetriebe von dem Getriebe gemäß Figur 18 nur durch das zusätzliche siebtes Schaltelement G unterscheidet, welches - wie in Figur 22 - im Kraftfluss zwischen der ersten Welle 1 (Antriebswelle AN) und der achten Welle 8 des Automatgetriebes angeordnet ist. Somit bedarf es keiner weiteren detaillierten Erklärung der Figur 32.

In Kenntnis dieser beiden beispielhaft erläuterten Alternativen zu dem in Figur 22 dargestellten Getriebeschema wird der Fachmann problemlos auch die anderen in der Tabelle der Figur 24 aufgelisteten Alternativen mit mehreren Plus-Planetenradsätzen generieren. Zur Beibehaltung des Kinematik des Radsatzsystems muss hierbei lediglich das erste Element jedes Minus-Planetenradsatzes als Sonnenrad, das zweite Element jedes Minus-Planetenradsatzes als Planetenradträger und das dritte Element jedes Minus-Planetenradsatzes als Hohlrad ausgebildet sein, während das erste Element jedes Plus-Planetenradsatzes als Sonnenrad, das zweite Element jedes Plus-Planetenradsatzes als Hohlrad und das dritte Element jedes Plus-Planetenradsatzes als Planetenradträger ausgebildet sein muss.

### Bezugszeichen

- 1: erste Welle
- 2: zweite Welle
- 3: dritte Welle
- 4: vierte Welle
- 5: fünfte Welle
- 6: sechste Welle
- 7: siebte Welle
- 8: achte Welle
- 9: neunte Welle

- A: erstes Schaltelement, erste Bremse
- B: zweites Schaltelement, zweite Bremse
- C: drittes Schaltelement, erste Kupplung
- D: viertes Schaltelement, zweite Kupplung
- E: fünftes Schaltelement, dritte Kupplung
- F: sechstes Schaltelement, vierte Kupplung
- G: siebtes Schaltelement, fünfte Kupplung

- AN: Antriebswelle
- AB: Abtriebswelle

- GG: Gehäuse

- RS1: erster Planetenradsatz
- SO1: Sonnenrad des ersten Planetenradsatzes
- ST1: Planetenradträger des ersten Planetenradsatzes
- PL1: Planetenräder des ersten Planetenradsatzes
- HO1: Hohlrad des ersten Planetenradsatzes

- RS2: zweiter Planetenradsatz
- SO2: Sonnenrad des zweiten Planetenradsatzes
- ST2: Planetenradträger des zweiten Planetenradsatzes
- PL2: Planetenräder des zweiten Planetenradsatzes
- HO2: Hohlrad des zweiten Planetenradsatzes

- RS3: dritter Planetenradsatz
- SO3: Sonnenrad des dritten Planetenradsatzes
- ST3: Planetenradträger des dritten Planetenradsatzes
- PL3: Planetenräder des dritten Planetenradsatzes
- HO3: Hohlrad des dritten Planetenradsatzes

- RS4: vierter Planetenradsatz
- SO4: Sonnenrad des vierten Planetenradsatzes
- ST4: Planetenradträger des vierten Planetenradsatzes
- PL4: Planetenräder des vierten Planetenradsatzes
- HO4: Hohlrad des vierten Planetenradsatzes

## Patentansprüche

1. Automatgetriebe, insbesondere für ein Kraftfahrzeug, mit einem Gehäuse (GG), mit neun drehbaren Wellen (1 bis 9) inklusive einer Antriebswelle (AN) und inklusive einer Abtriebswelle (AB), mit vier Planetenradsätzen (RS1, RS2, RS3, RS4), die jeweils ein erstes, zweites und drittes Element aufweisen, sowie mit mehreren Schaltelementen (A bis F; A bis G), deren selektives Schließen verschiedene Übersetzungsverhältnisse zwischen Antriebswelle (AN) und Abtriebswelle (AB) bewirken zum Schalten von mehreren Vorwärtsgängen und einem Rückwärtsgang, wobei
• das zweite Element (ST4; H04) des vierten Planetenradsatzes (RS4) die als Antriebswelle (AN) ausgeführte erste Welle (1) bildet,
• das zweite Element (ST3) des dritten Planetenradsatzes (RS3) die als Abtriebswelle (AB) ausgeführte zweite Welle (2) bildet,
• das erste Element (S04) des vierten Planetenradsatzes (RS4) die dritte Welle (3) bildet,
• die fünfte Welle (5) mit zumindest zwei (E, F) der Schaltelemente (A bis F; A bis G) ständig verbunden ist,
• das dritte Element (H03; ST3) des dritten Planetenradsatzes (RS3) die sechste Welle (6) bildet,
• die siebte Welle (7) das erste Element (S02) des zweiten Planetenradsatzes (RS2) ständig mit dem dritten Element (H04; ST4) des vierten Planetenradsatzes (RS4) verbindet,
• das zweite Element (ST2; H02) des zweiten Planetenradsatzes (RS2) die achte Welle (8) bildet,
• ein erstes Schaltelement (A) im Kraftfluss zwischen der dritten Welle (3) und dem Gehäuse (GG) angeordnet ist,
• ein zweites Schaltelement (B) ständig direkt mit der vierten Welle (4) verbunden ist,
• ein viertes Schaltelement (D) im Kraftfluss zwischen der zweiten Welle (2) und der achten Welle (8) angeordnet ist,
**dadurch gekennzeichnet, dass**
• das dritte Element (H02; ST2) des zweiten Planetenradsatzes (RS2) die neunte Welle (9) bildet,
• ein drittes Schaltelement (C) im Kraftfluss zwischen der ersten Welle (1) und der neunten Welle (9) angeordnet ist,
• ein fünftes Schaltelement (E) im Kraftfluss zwischen der fünften Welle (5) und der achten Welle (8) angeordnet ist, und
• ein sechstes Schaltelement (F) im Kraftfluss zwischen der fünften Welle (5) und der neunten Welle (9) angeordnet ist.

2. Automatgetriebe nach Anspruch 1, **dadurch gekennzeichnet, dass**
• das erste Element (SO1) des ersten Planetenradsatzes (RS1) ständig mit der dritten Welle (3) verbunden ist,
• das dritte Element (H01; ST1) des ersten Planetenradsatzes (RS1) die vierte Welle (4) bildet und über das zweite Schaltelement (B) an dem Gehäuse (GG) festsetzbar ist,
• das erste Element (S03) des dritten Planetenradsatzes (RS3) ständig mit der fünften Welle (5) verbunden ist, und
• das zweite Element (ST1; HO1) des ersten Planetenradsatzes (RS1) ständig mit der sechsten Welle (6) verbunden ist.

3. Automatgetriebe nach Anspruch 1, **dadurch gekennzeichnet, dass**
• das dritte Element (H01; ST1) des ersten Planetenradsatzes (RS1) ständig mit dem Gehäuse (GG) verbunden ist,
• das erste Element (SO1) des ersten Planetenradsatzes (RS1) die vierte Welle (4) bildet und über das zweite Schaltelement (B) mit der dritten Welle (3) verbindbar ist,
• das erste Element (S03) des dritten Planetenradsatzes (RS3) ständig mit der fünften Welle (5) verbunden ist, und
• das zweite Element (ST1; HO1) des ersten Planetenradsatzes (RS1) ständig mit der sechsten Welle (6) verbunden ist.

4. Automatgetriebe nach Anspruch 1, **dadurch gekennzeichnet, dass**
• das dritte Element (H01; ST1) des ersten Planetenradsatzes (RS1) ständig mit dem Gehäuse (GG) verbunden ist,
• das erste Element (SO1) des ersten Planetenradsatzes (RS1) ständig mit der dritten Welle (3) verbunden ist,
• das zweite Element (ST1; HO1) des ersten Planetenradsatzes (RS1) die vierte Welle (4) bildet und über das zweite Schaltelement (B) mit der sechsten Welle (6) verbindbar ist, und
• das erste Element (S03) des dritten Planetenradsatzes (RS3) ständig mit der fünften Welle (5) verbunden ist.

5. Automatgetriebe nach Anspruch 1, **dadurch gekennzeichnet, dass**
• das dritte Element (H01; ST1) des ersten Planetenradsatzes (RS1) ständig mit dem Gehäuse (GG) verbunden ist,
• das erste Element (SO1) des ersten Planetenradsatzes (RS1) ständig mit der dritten Welle (3) verbunden ist,
• das erste Element (S03) des dritten Planetenradsatzes (RS4) eine vierte Welle (4) bildet und über das zweite Schaltelement (B) mit der fünften Welle (5) verbindbar ist,
• die fünfte Welle (5) mit keinem der Planetenradsatzelemente direkt verbunden ist, und
• das zweite Element (ST1; HO1) des ersten Planetenradsatzes (RS1) ständig mit der sechsten Welle (6) verbunden ist.

6. Automatgetriebe nach einem oder mehreren der vorigen Ansprüche, **dadurch gekennzeichnet, dass** das dritte und sechste Schaltelement (C, F) räumlich gesehen unmittelbar benachbart zueinander angeordnet sind.

7. Automatgetriebe nach einem oder mehreren der vorigen Ansprüche, **dadurch gekennzeichnet, dass** das fünfte und sechste Schaltelement (E, F) räumlich gesehen unmittelbar benachbart zueinander angeordnet sind.

8. Automatgetriebe nach einem oder mehreren der vorigen Ansprüche, **dadurch gekennzeichnet, dass** das vierte und fünfte Schaltelement (D, E) räumlich gesehen unmittelbar benachbart zueinander angeordnet sind.

9. Automatgetriebe einem oder mehreren der vorigen Ansprüche,
**dadurch gekennzeichnet, dass** ein siebtes Schaltelement (G) im Kraftfluss zwischen der ersten Welle (1) und der achten Welle (8) angeordnet ist.

10. Automatgetriebe nach einem oder mehreren der vorigen Ansprüche, **dadurch gekennzeichnet, dass** in jedem Gang vier der Schaltelemente geschlossen sind, wobei bei einem Wechsel von einem Gang in den nachfolgend höheren oder niedrigeren Gang jeweils nur eines der zuvor geschlossenen Schaltelemente geöffnet und nur ein zuvor offenes Schaltelement geschlossen wird.

11. Automatgetriebe nach einem oder mehreren der Ansprüche 1 bis 8 und 10, **dadurch gekennzeichnet, dass** zehn Vorwärtsgänge und ein Rückwärtsgang schaltbar sind, wobei
▪ im ersten Vorwärtsgang das erste, zweite, dritte und sechste Schaltelement (A, B, C, F) drehmomentführend sind,
▪ im zweiten Vorwärtsgang das erste, zweite, dritte und fünfte Schaltelement (A, B, C, E) drehmomentführend sind,
▪ im dritten Vorwärtsgang das erste, zweite, fünfte und sechste Schaltelement (A, B, E, F) drehmomentführend sind,
▪ im vierten Vorwärtsgang das zweite, dritte, fünfte und sechste Schaltelement (B, C, E, F) drehmomentführend sind,
▪ im fünften Vorwärtsgang das zweite, vierte, fünfte und sechste Schaltelement (B, D, E, F) drehmomentführend sind,
▪ im sechsten Vorwärtsgang das zweite, dritte, vierte und fünfte Schaltelement (B, C, D, E) drehmomentführend sind,
▪ im siebten Vorwärtsgang das zweite, dritte, vierte und sechste Schaltelement (B, C, D, F) drehmomentführend sind,
▪ im achten Vorwärtsgang das dritte, vierte, fünfte und sechste Schaltelement (C, D, E, F) drehmomentführend sind,
▪ im neunten Vorwärtsgang das erste, dritte, vierte und sechste Schaltelement (A, C, D, F) drehmomentführend sind,
▪ im zehnten Vorwärtsgang das erste, vierte, fünfte und sechste Schaltelement (A, D, E, F) drehmomentführend sind, und
▪ im Rückwärtsgang das erste, zweite, vierte und sechste Schaltelement (A, B, D, F) drehmomentführend sind.

12. Automatgetriebe nach Anspruch 9 und 10, **dadurch gekennzeichnet, dass** elf Vorwärtsgänge und ein Rückwärtsgang schaltbar sind, wobei
▪ im ersten Vorwärtsgang das erste, zweite, sechste und siebte Schaltelement (A, B, F, G) drehmomentführend sind,
▪ im zweiten Vorwärtsgang das erste, zweite, dritte und sechste Schaltelement (A, B, C, F) drehmomentführend sind,
▪ im dritten Vorwärtsgang das erste, zweite, dritte und fünfte Schaltelement (A, B, C, E) drehmomentführend sind,
▪ im vierten Vorwärtsgang das erste, zweite, fünfte und sechste Schaltelement (A, B, E, F) drehmomentführend sind,
▪ im fünften Vorwärtsgang das zweite, dritte, fünfte und sechste Schaltelement (B, C, E, F) drehmomentführend sind,
▪ im sechsten Vorwärtsgang das zweite, vierte, fünfte und sechste Schaltelement (B, D, E, F) drehmomentführend sind,
▪ im siebten Vorwärtsgang das zweite, dritte, vierte und fünfte Schaltelement (B, C, D, E) drehmomentführend sind,
▪ im achten Vorwärtsgang das zweite, dritte, vierte und sechste Schaltelement (B, C, D, F) drehmomentführend sind,
▪ im neunten Vorwärtsgang das dritte, vierte, fünfte und sechste Schaltelement (C, D, E, F) drehmomentführend sind,
▪ im zehnten Vorwärtsgang das erste, dritte, vierte und sechste Schaltelement (A, C, D, F) drehmomentführend sind,
▪ im elften Vorwärtsgang das erste, vierte, fünfte und sechste Schaltelement (A, D, E, F) drehmomentführend sind, und
▪ im Rückwärtsgang das erste, zweite, vierte und sechste Schaltelement (A, B, D, F) drehmomentführend sind.

13. Automatgetriebe nach einem oder mehreren der Ansprüche 1 bis 12, **dadurch gekennzeichnet, dass** alle vier Planetenradsätze (RS1, RS2, RS3, RS4) als Minus-Planetenradsätze ausgebildet sind.

14. Automatgetriebe nach einem oder mehreren der Ansprüche 1 bis 12, **dadurch gekennzeichnet, dass** einer der vier Planetenradsätze (RS1, RS2, RS3, RS4) als Plus-Planetenradsatz ausgebildet ist, während die anderen drei Planetenradsätze jeweils als Minus-Planetenradsatz ausgebildet sind.

15. Automatgetriebe nach Anspruch 14, **dadurch gekennzeichnet, dass** der erste oder der zweite oder der vierte Planetenradsatz (RS1, RS2, RS4) als Plus-Planetenradsatz ausgebildet ist.

16. Automatgetriebe nach einem oder mehreren der Ansprüche 1 bis 12, **dadurch gekennzeichnet, dass** zwei der Planetenradsätze jeweils als Plus-Planetenradsatz und die anderen zwei Planetenradsätze jeweils als Minus-Planetenradsatz ausgebildet sind.

17. Automatgetriebe nach einem oder mehreren der Ansprüche 1 bis 12, **dadurch gekennzeichnet, dass** der dritte Planetenradsatz (RS3) als Minus-Planetenradsatz ausgebildet ist, während der erste, zweite und vierte Planetenradsatz (RS1, RS2, RS4) jeweils als Plus-Planetenradsatz ausgebildet sind.

18. Automatgetriebe nach einem oder mehreren der vorigen Ansprüche, **dadurch gekennzeichnet, dass**
▪ das erste Element jedes Minus-Planetenradsatzes und das erste Element jedes Plus-Planetenradsatzes als Sonnenrad ausgebildet ist,
▪ das zweite Element jedes Minus-Planetenradsatzes als Planetenradträger ausgebildet ist, während das zweite Element jedes Plus-Planetenradsatzes als Hohlrad ausgebildet ist,
▪ das dritte Element jedes Minus-Planetenradsatzes als Hohlrad ausgebildet ist, während das dritte Element jedes Plus-Planetenradsatzes als Planetenradträger ausgebildet ist.

19. Automatgetriebe nach einem oder mehreren der vorigen Ansprüche, **dadurch gekennzeichnet, dass** die Planetenradsätze koaxial zueinander und in axialer Richtung hintereinander in einer Reihenfolge "erster, vierter, zweiter, dritter Planetenradsatz" ("RS1, RS4, RS2, RS3") angeordnet sind.

20. Automatgetriebe nach Anspruch 19, **dadurch gekennzeichnet, dass** das erste Schaltelement (A) räumlich gesehen auf derjenigen Seite des ersten Planetenradsatzes (RS1) angeordnet ist, die dem vierten Planetenradsatz (RS4) abgewandt ist.

21. Automatgetriebe nach Anspruch 2 und Anspruch 19, **dadurch gekennzeichnet, dass** das zweite Schaltelement (B) räumlich gesehen zumindest teilweise in einem Bereich radial über dem ersten Planetenradsatz (RS1) angeordnet ist.

22. Automatgetriebe nach Anspruch 3 und Anspruch 19, **dadurch gekennzeichnet, dass** das zweite Schaltelement (B) räumlich gesehen auf derjenigen Seite des ersten Planetenradsatzes (RS1) angeordnet ist, die dem vierten Planetenradsatz (RS4) abgewandt ist, axial benachbart zum ersten Planetenradsatz (RS1).

23. Automatgetriebe nach Anspruch 4 und Anspruch 19, **dadurch gekennzeichnet, dass** das zweite Schaltelement (B) räumlich gesehen in einem Bereich axial zwischen dem ersten und vierten Planetenradsatz (RS1, RS4) angeordnet ist.

24. Automatgetriebe nach Anspruch 4 und Anspruch 19, **dadurch gekennzeichnet, dass** das zweite Schaltelement (B) räumlich gesehen zumindest teilweise in einem Bereich axial zwischen dem zweiten und dritten Planetenradsatz (RS2, RS3) angeordnet ist, axial benachbart zum dritten Planetenradsatz (RS3).

25. Automatgetriebe nach Anspruch 4 und Anspruch 19, **dadurch gekennzeichnet, dass** das zweite Schaltelement (B) räumlich gesehen zumindest teilweise in einem Bereich radial über dem dritten Planetenradsatz (RS3) angeordnet ist.

26. Automatgetriebe nach Anspruch 5 und Anspruch 19, **dadurch gekennzeichnet, dass** das zweite Schaltelement (B) räumlich gesehen in einem Bereich axial zwischen dem zweiten und dritten Planetenradsatz (RS2, RS3) angeordnet ist.

27. Automatgetriebe nach Anspruch 26, **dadurch gekennzeichnet, dass** das zweite Schaltelement (B) räumlich gesehen in einem Bereich radial unterhalb des fünften und/oder sechsten Schaltelementes (E, F) angeordnet ist.

28. Automatgetriebe nach Anspruch 26, **dadurch gekennzeichnet, dass** das zweite Schaltelement (B) räumlich gesehen benachbart zum dritten Planetenradsatz (RS3) angeordnet ist.

29. Automatgetriebe nach einem der Ansprüche 21 bis 28, **dadurch gekennzeichnet, dass** das zweite Schaltelement (B) als formschlüssiges Schaltelement ausgebildet ist.

30. Automatgetriebe nach Anspruch 3 und Anspruch 29, **dadurch gekennzeichnet, dass** das formschlüssige zweite Schaltelement (B) räumlich gesehen zumindest teilweise zentrisch innerhalb des ersten Elementes (SO1) des ersten Planetenradsatzes (RS1) angeordnet ist.

31. Automatgetriebe nach Anspruch 5 und Anspruch 29, **dadurch gekennzeichnet, dass** das formschlüssige zweite Schaltelement (B) räumlich gesehen zumindest teilweise zentrisch innerhalb des ersten Elementes (S03) des dritten Planetenradsatzes (RS3) angeordnet ist.

32. Automatgetriebe nach Anspruch 19, **dadurch gekennzeichnet, dass** das dritte Schaltelement (C) räumlich gesehen in einem Bereich axial zwischen dem zweiten und dritten Planetenradsatz (RS2, RS3) angeordnet ist, axial benachbart zum zweiten Planetenradsatz (RS2).

33. Automatgetriebe nach Anspruch 19, **dadurch gekennzeichnet, dass** das vierte Schaltelement (D) räumlich gesehen in einem Bereich axial zwischen dem zweiten und dritten Planetenradsatz (RS2, RS3) angeordnet ist, axial benachbart zum dritten Planetenradsatz (RS3).

34. Automatgetriebe nach Anspruch 19, **dadurch gekennzeichnet, dass** das vierte Schaltelement (D) räumlich gesehen in einem Bereich axial zwischen dem zweiten und vierten Planetenradsatz (RS2, RS4) angeordnet ist, axial benachbart zum zweiten Planetenradsatz (RS2).

35. Automatgetriebe nach Anspruch 19, **dadurch gekennzeichnet, dass** das fünfte Schaltelement (E) räumlich gesehen in einem Bereich axial zwischen dem zweiten und vierten Planetenradsatz (RS2, RS4) angeordnet ist.

36. Automatgetriebe nach Anspruch 19, **dadurch gekennzeichnet, dass** das sechste Schaltelement (F) räumlich gesehen in einem Bereich axial zwischen dem zweiten und vierten Planetenradsatz (RS2, RS4) angeordnet ist.

37. Automatgetriebe nach Anspruch 19, **dadurch gekennzeichnet, dass** das siebte Schaltelement (G) räumlich gesehen in einem Bereich axial zwischen dem ersten und vierten Planetenradsatz (RS1, RS4) angeordnet ist.

38. Automatgetriebe nach Anspruch 19, **dadurch gekennzeichnet, dass** das siebte Schaltelement (G) räumlich gesehen in einem Bereich radial über dem vierten Planetenradsatz (RS4) angeordnet ist.

39. Automatgetriebe nach Anspruch 19, **dadurch gekennzeichnet, dass** das siebte Schaltelement (G) räumlich gesehen in einem Bereich axial zwischen dem zweiten und vierten Planetenradsatz (RS2, RS4) angeordnet ist.
